# EUROPÄISCHE PATENTSCHRIFT

(11) **EP 4 129 870 B1**
(45) Veröffentlichungstag und Bekanntmachung des Hinweises auf die Patenterteilung: **18.12.2024**
(21) Anmeldenummer: 22180881.9
(22) Anmeldetag: 24.06.2022
(51) Int. Cl.: B65G 35/06, B23Q 7/14

(54) **MODULARE WEICHENVORRICHTUNG ZUM ZWISCHENLAGERN VON WERKSTÜCKTRÄGERN FÜR EIN LINEARTRANSPORTSYSTEM**
MODULAR SWITCHING DEVICE FOR INTERMEDIATE STORAGE OF WORKPIECE CARRIERS FOR A LINEAR TRANSPORT SYSTEM
DISPOSITIF MODULAIRE D'AIGUILLAGE PERMETTANT DE STOCKER DE MANIÈRE INTERMÉDIAIRE DES PORTE-PIÈCES POUR UN SYSTÈME DE TRANSPORT LINÉAIRE

(30) Priorität: 04.08.2021 DE 102021120291
(43) Veröffentlichungstag der Anmeldung: 08.02.2023
(73) Patentinhaber: MD Elektronik GmbH, 84478 Waldkraiburg (DE)
(72) Erfinder: Heller, Maria, 84424 Isen (DE); Schuster, Udo, 83374 Traunwalchen (DE); Preusche, Maximilian, 84149 Obervilslern (DE)

(56) Entgegenhaltungen:
- WO-A1-2009/035388
- DE-A1- 10 009 903
- JP-A- H05 178 413

## Beschreibung

### Technisches Gebiet

Die Erfindung betrifft eine modulare Weichenvorrichtung zum Zwischenlagern von Werkstückträgern für ein Lineartransportsystem. Ferner betrifft die Erfindung ein Verfahren zum Betreiben einer derartigen Weichenvorrichtung.

### Stand der Technik

Lineartransportsysteme werden in der industriellen Fertigung eingesetzt, bspw. um Werkstücke entlang eines bestimmten Fertigungspfads zu transportieren. Derartige Lineartransportsysteme weisen in der Regel ein Transportband auf, mittels welchem darauf gelagerte Werkstückträger in eine gewünschte Transportrichtung transportierbar sind. Das Höhenniveau, auf welchem die Werkstückträger entlang des Transportbands des Lineartransportsystems transportierbar sind bzw. transportiert werden, wird im Rahmen dieser Anmeldung als Transportniveau bezeichnet.

Im Rahmen eines technischen Prozesses, bei welchem ein derartiges Lineartransportsystem zum Einsatz kommt, durchlaufen die Werkstücke in der Regel eine bestimmte Anzahl vorgesehener Fertigungsschritte.

Insbesondere kann ein derartiges Lineartransportsystem zur Fertigung von elektrischen Leitungen verwendet werden. Es kann jedoch auch für beliebige andere Werkstücke verwendet werden.

Lineartransportsysteme für die Fertigung sind seit längerem bekannt, etwa aus der erloschenen US-Patentschrift US6095054A.

Üblicherweise umfassen derartige Lineartransportsysteme Wechselbereiche für Werkstücke, in welchen zu prozessierende oder prozessierte Werkstücke gewechselt werden können. In diesen Wechselbereichen werden bspw. zu verarbeitende Werkstücke auf Werkstückträger, welche auf dem Transportband transportierbar sind, aufgelegt oder Werkstücke deren Bearbeitung abgeschlossen ist, von den auf dem Transportband transportierbaren Werkstückträgern entnommen.

Dient ein Wechselbereich zum Einlegen bzw. der Zuführung von Werkstücken auf das Lineartransportsystem, kann dieser als Einlegebereich bezeichnet werden. Dient ein Wechselbereich zur Entnahme von Werkstücken vom Lineartransportsystem, kann dieser als Entnahmebereich bezeichnet werden.

Nach dem Einlegen der Werkstücke werden diese mittels des Lineartransportsystems vom Wechselbereich in einen Bearbeitungsbereich transportiert, in welchem die Werkstücke bearbeitet werden. Nach Abschluss der Bearbeitung werden diese zum Entnahmebereich weiter transportiert. Einlegebereich und Entnahmebereich sind bei derartigen Lineartransportsystemen räumlich getrennt. Üblicherweise erfolgt der Transport der Werkstücke in eine bestimmte Umlaufrichtung.

Bevor somit eine neue Bestückung der Werkstückträger mit Werkstücken erfolgen kann, müssen die bearbeiteten Werkstücke vom Lineartransportsystem im Entnahmebereich entnommen werden und zurück zum Einlegebereich transportiert werden.

Im Gegensatz zu Lineartransportsystemen, welche auch als Lineartransferanlagen oder Lineartransfersysteme bezeichnet werden, ist bei sogenannten Rundtischanlagen der Einlegebereich und der Entnahmebereich identisch, d.h. das Einlegen und das Entnehmen von Werkstücken erfolgt am selben Ort. Dies bringt prozesstechnische Vorteile mit sich. Allerdings ist eine derartige Rundtischanlage nicht für die Prozessierung beliebiger Werkstücke, insbesondere nicht für sperrige Werkstücke, geeignet.

Das Einlegen und die Entnahme der Werkstücke erfolgt bei Lineartransportanlagen häufig durch Bedienpersonal. Es kann das Einlegen mit einem Bediener erfolgen und die Entnahme mit einem weiteren Bediener oder das Einlegen erfolgt durch nur einen Bediener und die Entnahme erfolgt durch ein automatisiertes System.

Bei einem Rundtischsystem kann das Einlegen und die Entnahme der Werkstücke durch einen Bediener erfolgen.

Um hinsichtlich des Einlegens und der Entnahme von Werkstücken eine möglichst hohe Taktung für die Fertigung bereitzustellen, ist ein schnelles Einlegen von Werkstücken und auch ein schnelles Entnehmen von Werkstücken essenziell.

Um den Wechselprozess für Werkstücke auf dem Lineartransportsystem zu beschleunigen ist bekannt, dass bei der Entnahme eine maschinelle Unterstützung erfolgen kann. Dies erhöht die Entnahmegeschwindigkeit. Ggf. kann sogar eine zweite Bedienperson für den Wechselbereich eingespart werden.

Es ist daher anzustreben, den Prozess zur Bearbeitung von Werkstücken auf einem Lineartransportsystem weiter zu verbessern, insbesondere um während des Wechselns von Werkstücken entstehender Leerlauf im Bearbeitungsbereich des Lineartransportsystems zu vermeiden.

Die JP H05178413 A offenbart eine gattungsgemäße modulare Weichenvorrichtung.

### Beschreibung der Erfindung

Es ist Aufgabe der Erfindung, eine Lösung bereitzustellen, mittels welchem bei einem Lineartransportsystem die Effizienz erhöht werden kann.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein. Weitere Ausführungsformen und Weiterbildungen ergeben sich aus den Unteransprüchen sowie aus der Beschreibung unter Bezugnahme auf die Figuren.

Die vorliegende Erfindung umfasst eine modulare Weichenvorrichtung gemäß Anspruch 1.

Mittels einer derartigen Weichenvorrichtung ist es möglich, mit Werkstücken bestückte Werkstückträger auf einer vom Transportniveau abweichenden Ebene zwischenzulagern, und diese bei Bedarf dem Lineartransportsystem bzw. dem Bearbeitungsbereich wieder zuzuführen. Hierdurch wird es ermöglicht, dass für ein Lineartransportsystem ein Wechselbereich geschaffen wird, der als Einlegebereich und als Entnahmebereich genutzt werden kann. Es werden somit die Vorteile einer Rundtischanlage mit den Vorteilen einer Lineartransportanlage kombiniert. Aus diesem Grund kann Personal und damit Kosten eingespart werden, ohne die Auslastung eines Bearbeitungsbereichs einer Lineartransportanlage negativ zu beeinträchtigen.

Es können die mittels der Weichenvorrichtung zwischengelagerten Werkstücke direkt in den Bearbeitungsbereich eingeführt werden, sobald die aus dem Bearbeitungsbereich zurücktransportierten Werkstücke die Weichenvorrichtung in Richtung des als Entnahmebereich wirkenden Wechselbereichs passiert haben. Während die vormals zwischengelagerten Werkstücke im Bearbeitungsbereich prozessiert werden, können die Werkstücke im als Entnahmebereich wirkenden Wechselbereich entnommen werden. Ggf. kann auch bereits eine neue Bestückung der Werkstückträger mit Werkstücken erfolgen. Ferner führt die Modularität der Weicheneinrichtung dazu, dass diese für bestehende modulare Lineartransportsysteme ohne weiteres als Zusatzmodul eingefügt werden kann. Durch Anpassung der Größe der Weichenvorrichtung, und damit der Zwischenlagerkapazität, oder die Verwendung mehrerer Weichenvorrichtungen ist die Lösung gut für unterschiedlichste Einsatzzwecke skalierbar.

Diese Weichenvorrichtung ist vorteilhaft einsetzbar für ein modular aufgebautes Lineartransportsystem. D.h. der Bearbeitungsbereich und der Wechselbereich werden gebildet aus einem oder einer Mehrzahl an Modulen des Lineartransportsystems. Damit kann die Weichenvorrichtung ohne Schwierigkeiten zwischen einem ersten Modul eines Bearbeitungsbereichs und dem letzten Modul eines Wechselbereichs eingefügt bzw. angeordnet werden.

Unter Transportrichtung wird die Richtung verstanden, in welche Werkstückträger transportierbar sind. Die Transportierbarkeit von Werkstückträgern ist längs des Transportbands des Lineartransportsystems vom Wechselbereich zum Bearbeitungsbereich und vom Bearbeitungsbereich zum Wechselbereich gegeben. Es existieren somit zwei Transportrichtungen, vom Bearbeitungsbereich Richtung Wechselbereich und vom Wechselbereich Richtung Bearbeitungsbereich.

Wird im Rahmen der Beschreibung "in Transportrichtung" oder "entgegen der Transportrichtung" verwendet, wird eine bestimmte Transportrichtung zugrunde gelegt und es sollen in diesem Zusammenhang relative örtliche Bezüge bzgl. einer bestimmten Transportrichtung verdeutlicht werden.

Als erste und zweite Trägereinheit können beliebige Strukturen zum Einsatz kommen, welche dazu geeignet sind, eine darauf gelagerte Führungseinrichtung samt Werkstückträger und Werkstück zu tragen. Vorteilhaft kann die erste und/oder die zweite Trägereinheit eine Grundplatte umfassen. Diese kann mit Ausnehmungen zur Gewichtsreduktion versehen sein. Dadurch wird das Gewicht der jeweiligen Trägereinheit verringert, wodurch für die vertikale Verstellung der Trägereinheiten weniger Kraft und somit Energie erforderlich ist.

Sofern nachfolgend lediglich der Begriff Trägereinheit ohne den Zusatz "erste" oder "zweite" verwendet ist, gelten die Ausführungen jeweils für die erste und die zweite Trägereinheit isoliert, wobei daraus nicht folgt, dass die erste und die zweite Trägereinheit derart ausgebildet sind, sondern zumindest einer der beiden Trägereinheiten, aber auch beide Trägereinheiten ausgebildet sein können. In einer vorteilhaften Ausgestaltung sind die erste und die zweite Trägerplatte samt der auf diesen angeordneten bzw. gelagerten Komponenten baugleich ausgebildet.

Die erste und die zweite Trägereinheit sind sich jeweils horizontal erstreckend vertikal voneinander beabstandet angeordnet. Ferner sind die beiden Trägereinheiten übereinander, insbesondere in vertikaler Richtung deckungsgleich angeordnet. Die erste Trägereinheit und die zweite Trägereinheit sind relativ zueinander in einem vorgegebenen fixen Abstand angeordnet. D.h. der Abstand der ersten Trägereinheit und der zweiten Trägereinheit bleibt unabhängig von der absoluten vertikalen Lage stets gleich.

Die erste Trägereinheit und die zweite Trägereinheit sind Teil einer insgesamt starren baulichen Einheit, die mittels der Hubvorrichtung in vertikaler Richtung zwischen zwei Stellungen derart verstellbar ist, dass in einer ersten Stellung die auf der ersten Trägereinheit angeordnete Führungseinrichtung derart positioniert werden kann, dass mittels der auf der ersten Trägereinheit angeordneten Führungseinrichtung Werkstückträger auf dem Transportniveau transportierbar sind, und dass in einer zweiten Stellung die auf der zweiten Trägereinheit angeordnete Führungseinrichtung derart positioniert werden kann, dass mittels der auf der zweiten Trägereinheit angeordneten Führungseinrichtung Werkstückträger auf dem gleichen Transportniveau transportierbar sind.

Es kann daher stets entweder nur die erste oder nur die zweite Trägereinheit derart angeordnet sein, dass mittels deren jeweiliger Führungseinrichtung Werkstückträger auf Transportniveau transportierbar sind. Eine gemeinsame Verstellung hat keine gleichzeitige Anordnung der ersten und der zweiten Trägereinheit derart, dass mittels der jeweiligen Führungseinrichtung der jeweiligen Trägereinheit Werkstückträger auf dem Transportniveau transportierbar sind, zum Gegenstand. Gemeinsam verstellbar bedeutet daher im Sinne der Anmeldung eine starr gekoppelte Bewegung der ersten und der zweiten Trägereinheit mittels der Hubvorrichtung. Mit anderen Worten, die erste Trägereinheit folgt in ihrer Bewegung der zweiten Trägereinheit und umgekehrt, wobei die Relativposition der ersten Trägereinheit zur zweiten Trägereinheit während der Bewegung und in den einstellbaren Endpositionen der Trägereinheiten konstant bleibt.

Auf der ersten Trägereinheit und auf der zweiten Trägereinheit ist jeweils eine Führungseinrichtung gelagert, mittels welcher Werkstückträger geführt auf dem Transportniveau transportierbar sind. Die auf der ersten Trägereinheit angeordnete Führungseinrichtung und die auf der zweiten Trägereinheit angeordnete Führungseinrichtung können vorzugsweise baugleich ausgestaltet sein.

Die Werkstückträger sind mittels eines Transportbands antreibbar, insbesondere, wenn diese auf dem Transportniveau angeordnet sind. Dabei kann ein Transportband auf der ersten und der zweiten Trägereinheit gelagert sein, welches dann antreibbar ist, wenn die jeweilige Trägereinheit derart angeordnet ist, dass Werkstückträger auf dem Transportniveau transportierbar sind.

In einer vorteilhaften Ausführungsform weist jedoch keine der Trägereinheiten ein Transportband auf und ein Transportband ist an einem örtlich stationären Teil der Weichenvorrichtung angeordnet. Vorzugsweise ist dies derart angeordnet, dass ein Fuß eines Werkstückträgers dann auf diesem positioniert ist und damit der Werkstückträger transportierbar ist, wenn der auf der ersten oder zweiten Trägereinheit angeordnete Werkstückträger auf dem Transportniveau angeordnet ist.

Ferner kann die auf der ersten und/oder zweiten Trägereinheit gelagerte Führungseinrichtung derart angeordnet und ausgestaltet sein, dass aus einem Bearbeitungsbereich einlaufende Werkstückträger kontinuierlich an die auf der ersten und/oder zweiten Trägereinheit gelagerte Führungseinrichtung übergebbar sind. Auch kann die auf der ersten und/oder zweiten Trägereinheit gelagerte Führungseinrichtung derart angeordnet und ausgestaltet sein, dass aus einem Wechselbereich einlaufende Werkstückträger kontinuierlich an die auf der ersten und/oder zweiten Trägereinheit gelagerte Führungseinrichtung übergebbar sind.

Die Übergebbarkeit von Werkstückträgern aus dem Bearbeitungsbereich und dem Wechselbereich an die Führungseinrichtung der jeweiligen Trägereinheit kann insbesondere dann gegeben sein, wenn die Trägereinheit, an welche Werkstückträger zu übergeben sind, derart angeordnet ist, dass mittels diesen Werkstückträger auf dem Transportniveau transportierbar sind.

Als Hubvorrichtung zur gemeinsamen vertikalen Verstellung der ersten und zweiten Trägereinheit kann eine beliebige Hubvorrichtung verwendet werden. So kann diese bspw. mit Hilfe von Stellmotoren, Hydraulikzylinder oder anderer Methoden eine vertikale Verstellung bewirken. Es ist jedoch vorzusehen, dass die Hubvorrichtung derart ausgestaltet ist, dass diese eine gemeinsame erfolgende vertikale Verstellung der ersten und zweiten Trägereinheit mit zumindest auf einem der Trägereinheiten angeordneten, mit Werkstücken bestückten Werkstückträgern zuverlässig bewirken kann. Ferner ist die Hubeinrichtung derart ausgestaltet, dass diese in einer ersten Hebeposition die erste Trägereinheit derart anordnen kann, dass auf deren Führungseinrichtung anordenbare Werkstückträger auf dem Transportniveau transportierbar sind. Auch ist die Hubeinrichtung derart ausgestaltet, dass diese in einer zweiten Hebeposition die zweite Trägereinheit derart anordnen kann, dass auf deren Führungseinrichtung anordenbare Werkstückträger auf dem Transportniveau transportierbar sind.

Vorteilhafterweise wird die Hubvorrichtung mittels einer Steuereinheit gesteuert. Hierzu kann die vertikale Lage der ersten und/oder zweiten Trägereinheit erfasst und der Steuereinheit zugeführt werden. Die Steuereinheit kann die Hubvorrichtung auf dieser Grundlage dann derart steuern, dass die erste Trägereinheit oder die zweite Trägereinheit derart angeordnet ist, dass auf dieser angeordnete Werkstückträger auf dem Transportniveau transportierbar sind.

Erfindungsgemäß ist die erste und die zweite Trägereinheit an einer gemeinsamen Wand gelagert, wobei die Wand mittels der Hubvorrichtung in vertikaler Richtung verstellbar ist. Indem eine gemeinsame Wand für die erste Trägereinheit und die zweite Trägereinheit vorgesehen ist, welche vertikal verstellbar ist, wird eine konstruktive einfache Möglichkeit bereitgestellt, die erste und die zweite Trägereinheit gemeinsam vertikal und fest beabstandet zueinander zu verstellen. Es ist somit keine gesonderte Hubvorrichtung für die erste Trägereinheit und die zweite Trägereinheit erforderlich.

Die Wand kann einteilig oder mehrteilig ausgebildet sein. Insbesondere kann diese parallel zur Transportrichtung angeordnet sein. Ferner kann diese auf einer der Führungseinrichtung abgewandten Seite der Trägereinheit angeordnet sein, und deren Normalenvektor in eine horizontale Richtung senkrecht zur Transportrichtung orientiert sein. Die Wand kann in diesem Fall als Rückwand bezeichnet werden, während die Führungseinrichtung in einem "vorderen" Bereich der jeweiligen Trägereinheit angeordnet ist.

Die erste Trägereinheit und die zweite Trägereinheit können jeweils über eine horizontale, parallel zu der auf der jeweiligen Trägereinheit gelagerten Führungseinrichtung angeordnete Schiene mit der Wand verbunden sein. Dies erlaubt eine einfache und sichere Lagerung der Trägereinheiten an der Wand. Ferner kann auch die Wand nicht lösbar mit der ersten und zweiten Trägereinheit verbunden sein, etwa verschweißt, jedoch die Wand mit einem Schienengestell an der Weichenvorrichtung höhenverstellbar gelagert sein.

In einer Ausführungsform der Weichenvorrichtung ist die Hubvorrichtung als pneumatischer Zylinder ausgebildet, welcher einen relativ zu einem Gestell ortsfesten Zylindergrundkörper aufweist, der an dem Gestell gelagert ist, und einem in vertikaler Richtung gesteuert verstellbaren Kolben, wobei der Kolben, insbesondere dessen Ende, an einer an der Wand angeordneten Querplatte gelagert ist. Das Gestell nimmt die Kraft des Zylindergrundkörpers auf, welche aufgebracht werden muss, um eine vertikale Verstellung der ersten und zweiten Trägereinheit zu bewirken. Ferner kann das Gestell weitere Komponenten der Weichenvorrichtung lagern. Die Verwendung einer an der Wand angeordneten Querplatte ist vorteilhaft, da die Kraft des Kolbens von der Querplatte in vertikaler Richtung aufgenommen werden kann. Die Querplatte umfasst somit einen horizontal angeordneten Teil, an welchem der Kolben bzw. dessen Ende sein kann. Die Kraft des Kolbens wirkt dann vertikal auf die quer zur Wand angeordneten Querplatte. Hierdurch werden Scherkräfte, insbesondere zwischen Wand und Kolben vermieden. Die Verwendung eines pneumatischen Zylinders ist von Vorteil, da dieser exakt ansteuerbar ist und vergleichsweise schnell in vertikaler Richtung verfahrbar ist. Hierdurch wird eine sichere vertikale Verstellung bei gleichzeitig geringen Verstellzeiten für die Weichenvorrichtung zwischen einem z.B. relativ zum Transportniveau erhöhten Zwischenlagerniveau für die Werkstückträger und dem Transportniveau erreicht. Neben dem Gestell kann ferner ein Führungsgestell vorgesehen sein, mit welchem die Hubbewegung der Hubvorrichtung, und damit die gemeinsame Verstellung der ersten und zweiten Trägereinheit, geführt werden kann.

Erfindungsgemäß ist die vertikale Verstellung der Wand durch einen ersten und einen zweiten Stoßdämpfer begrenzt, wobei der erste Stoßdämpfer derart angeordnet ist, dass dieser die vertikale Verstellung begrenzt, wenn die auf der ersten Trägereinheit gelagerte Führungseinrichtung derart positioniert ist, dass darauf anordenbare Werkstückträger auf dem Transportniveau transportierbar sind, wobei der zweite Stoßdämpfer derart angeordnet ist, dass dieser die vertikale Verstellung begrenzt, wenn die auf der zweiten Trägereinheit gelagerte Führungseinrichtung derart positioniert ist, dass darauf anordenbare Werkstückträger auf dem Transportniveau transportierbar sind. Hierdurch wird in einfacher Weise eine gewünschte, insbesondere Transportniveaubezogene Endposition der ersten und zweiten Trägereinheit bereitgestellt, wobei die Bewegung der ersten und zweiten Trägereinheit bei Annäherung an die jeweilige Endposition kontrolliert gebremst wird.

Ferner können der erste und der zweite Stoßdämpfer von mindestens einem Positionsgeber abgefragt werden. Aus den Werten des Positionsgebers kann ein Dämpfungszustand des jeweiligen Stoßdämpfers ermittelt werden, und daraus mittels einer Steuereinheit abgeleitet werden, ob die jeweilige Trägereinheit bereits in der gewünschten Endposition positioniert ist. Die Steuereinheit kann verwendet werden, um die Hubeinrichtung derart anzusteuern, dass die jeweilige Trägereinheit derart positioniert ist, dass auf ihr gelagerte Werkstückträger auf Transportniveau transportierbar bzw. angeordnet sind. Ist die erste Trägereinheit derart positioniert, dass auf ihr gelagerte Werkstückträger auf Transportniveau transportierbar bzw. angeordnet sind, entspricht dies vorzugsweise der Endposition der ersten Trägereinheit. Ist die zweite Trägereinheit derart positioniert, dass auf ihr gelagerte Werkstückträger auf Transportniveau transportierbar bzw. angeordnet sind, entspricht dies vorzugsweise der Endposition der zweiten Trägereinheit.

Vorzugsweise wirken der erste Stoßdämpfer und der zweite Stoßdämpfer mit dem Gestell zusammen, um die vertikale Verstellung zu begrenzen. Der erste und/oder der zweite Stoßdämpfer können dabei an einem mit der Hubvorrichtung beweglichen Teil angeordnet sein. Auch können diese am Gestell angeordnet sein und mit einem in vertikaler Richtung verstellbaren Teil, bspw. der ersten und/oder zweiten Trägereinheit, der Weichenvorrichtung zusammenwirken, um die vertikale Verstellung zu begrenzen.

In einer weiteren Ausführungsform der Weichenvorrichtung ist auf der ersten und auf der zweiten Trägereinheit eine Mehrzahl an Sensoren zur Erfassung der Position von Werkstückträgern angeordnet. Die Sensoren sind vorzugsweise mit einer Steuereinheit verbunden. Indem die Position von einzelnen Werkstückträgern mittels entsprechender Sensoren erfassbar ist, kann eine vertikale Verstellung der Weichenvorrichtung abhängig von der Position und der Anzahl der vorhandenen Werkstückträger auf der jeweiligen Trägereinheit erfolgen. Als Sensoren können bspw. Induktionssensoren verwendet werden, mittels welchen ein Vorhandensein bzw. eine Präsenz eines Werkstückträgers an einer bestimmten Position auf der Trägereinheit feststellbar ist.

In einer weiteren Variante der Weichenvorrichtung ist auf der ersten Trägereinheit und/oder auf der zweiten Trägereinheit jeweils mindestens eine Stoppvorrichtung, insbesondere mindestens ein Stopperzylinder, angeordnet, mittels welcher die Bewegung der Werkstückträger auf dem jeweiligen Transportband an einer vorgegebenen Position stoppbar ist. Eine derartige Stoppvorrichtung erlaubt eine aktive Unterbrechung einer Bewegung eines Werkstückträgers. Die Stoppvorrichtung kann bspw. als Hebeeinrichtung ausgebildet sein, welche einen Werkstückträger vom Transportband abhebt, um dessen Bewegung zu stoppen. Alternativ kann die Stoppvorrichtung bspw. auch als Auflaufbock ausgebildet sein, welche eine Bewegung des Werkstückträgers in Transportrichtung blockiert, in dem der Werkstückträger auf den Auflaufbock aufläuft.

Vorzugsweise ist die wenigstens eine Stoppvorrichtung in einem ersten und/oder letzten Drittel, insbesondere ersten oder letzten Viertel, der ersten und/oder zweiten Trägereinheit in Transportrichtung angeordnet. Eine Anordnung einer Stoppvorrichtung in einem ersten Drittel bzw. Viertel und in einem letzten Drittel bzw. Viertel kann sinnvoll sein, da mittels der Weichenvorrichtung Werkstückträger in beide Richtungen transportierbar sind. Laufen Werkstückträger bspw. vom als Einlegebereich wirkenden Wechselbereich auf eine der Trägereinheiten, dann kann der in Transportrichtung erste Werkstückträger an der Stoppvorrichtung in dem dem Bearbeitungsbereich zugewandten Teil der ersten und/oder zweiten Trägereinheit gestoppt werden. Eine vorgegebene Anzahl an Werkstückträgern kann auf diesen ersten gestoppten Werkstückträger auflaufen. Wird ausschließlich einer der beiden Trägereinheiten zum Zwischenlagern von Werkstückträgern genutzt, kann nur diese die erste und zweite Stoppvorrichtung aufweisen.

Die Positionen der Werkstückträger und damit auch deren Anzahl können mittels etwaiger vorhandener Positionssensoren erfasst werden. Ist die vorgesehene Anzahl an Werkstückträgern auf derjenigen Trägereinheit gelagert, mittels der Werkstückträger auf Transportniveau transportierbar sind, kann mittels der Hubvorrichtung eine vertikale Bewegung bewirkt werden. Diese endet, wenn die andere Trägereinheit derart angeordnet ist, dass mittels dieser Werkstückträger auf Transportniveau transportierbar sind. Durch die Stoppvorrichtung kann somit sichergestellt werden, dass z.B. die zwischenzulagernden Werkstückträger möglichst zentral auf der jeweiligen Trägereinheit in einer gewünschten Position angeordnet sind.

In einer weiteren Ausführungsform der Weichenvorrichtung sind auf der ersten Trägereinheit und/oder auf der zweiten Trägereinheit jeweils mindestens eine erste und eine zweite Stoppvorrichtung angeordnet, mittels welchen die Position von Werkstückträgern auf eine Position zwischen der ersten Stoppvorrichtung und der zweiten Stoppvorrichtung auf dem jeweiligen Transportband begrenzbar ist. Es kann somit ein Bereich festgelegt werden, in welchem die Werkstückträger angeordnet sein sollen, insbesondere wenn die Trägereinheit samt der darauf gelagerten Werkstückträger vertikal verfahren werden soll. Die Begrenzung mittels der Stoppvorrichtung erfolgt derart, dass die am weitesten außen angeordneten Werkstückträger, d.h. in und entgegen einer bestimmten Transportrichtung dem Ende der jeweiligen Trägereinheit am nächsten angeordnete Werkstückträger, maximal an der Position der ersten und zweiten Stoppvorrichtung angeordnet sind. Die Werkstückträger sind also nicht zum Wechselbereich oder zum Bearbeitungsbereich hin näher angeordnet, als die erste und die zweite Stoppvorrichtung. Die übrigen Werkstückträger sind zwischen diesen in den Außenpositionen angeordneten Werkstückträgern angeordnet.

In einer weiteren Ausführungsvariante der Weichenvorrichtung umfasst diese ein in Transportrichtung, der ersten und zweiten Trägereinheit vorgelagertes, erstes, relativ zum Transportniveau ortsfestes Fixteil und ein in Transportrichtung der ersten und zweiten Trägereinheit nachgelagertes zweites, relativ zum Transportniveau ortsfestes Fixteil, wobei das erste und/oder das zweite Fixteil ein Transportband umfasst, wobei mittels des Transportbands auf der ersten und zweiten Trägereinheit angeordnete Werkstückträger transportierbar sind, wenn die jeweiligen Werkstückträger auf dem Transportniveau angeordnet sind. Das erste und das zweite Fixteil sind somit ein nicht mit der Hubvorrichtung vertikal verstellbarer Teil der Weichenvorrichtung und sind in Transportrichtung vor und hinter der ersten und zweiten Trägereinheit angeordnet. Das erste und/oder das zweite Fixteil können einen Antrieb für das Transportband umfassen, welches mittels des Antriebs antreibbar ist.

In einer vorteilhaften Ausführungsform umfassen das erste und das zweite Fixteil ein gemeinsames Transportband, mittels welchem Werkstückträger in Transportrichtung förderbar sind. Vorzugsweise weist nur das erste oder nur das zweite Fixteil einen Antrieb zum Antreiben des gemeinsamen Transportbands auf. Das gemeinsame Transportband ist vorzugsweise derart angeordnet, dass diese mit einem Werkstückträger wechselwirken, wenn dieser auf Transportniveau angeordnet ist. Hierzu kann der Werkstückträger einen Fuß aufweisen, der bei Anordnung des Werkstückträgers auf Transportniveau auf dem Transportband aufliegt. Hierdurch kann der Werkstückträger in Transportrichtung gefördert werden, soweit dieser nicht durch eine Stoppvorrichtung gestoppt ist.

Indem der Antrieb und das Transportband an einem oder beiden der ortsfesten Fixteile angeordnet ist, kann vermieden werden, dass auf der ersten Trägereinheit und der zweiten Trägereinheit jeweils ein Transportband, ggf. sogar mit zusätzlichem Antrieb, erforderlich ist. Ferner wird dadurch vermieden, dass der Antrieb ebenfalls vertikal verstellt werden muss, wenn die erste und die zweite Trägereinheit verstellt werden. Dies würde das zu verstellende Gewicht deutlich erhöhen und die Weichenvorrichtung insgesamt verteuern.

Ferner können das erste Fixteil und das zweite Fixteil eine Transportvorrichtung umfassen, mittels welcher vom Bearbeitungsbereich oder vom Wechselbereich antransportierte Werkstückträger an die erste oder zweite Trägereinheit übergebbar sind. Insbesondere können das erste Fixteil und das zweite Fixteil ein Transportband, ggf. ein gemeinsames Transportband, aufweisen, mittels welchem Werkstückträger auf Transportniveau auf dem ersten und/oder zweiten Fixteil transportierbar sind. Dieses Transportband kann ebenfalls von dem vorhandenen Antrieb angetrieben werden. Es kann somit eine Ausgestaltung erfolgen, dass nur ein Antrieb und nur ein Transportband benötigt wird, um Werkstückträger über die gesamte Weichenvorrichtung zu fördern.

In einer weiteren Ausführungsform umfasst das erste Fixteil und das zweite Fixteil jeweils mindestens eine Stoppvorrichtung, die dazu ausgestaltet ist, aus dem Bearbeitungsbereich und/oder aus dem Wechselbereich antransportierte Werkstückträger an einer vorgegebenen Position, insbesondere auf dem Fixteil, welches als erstes vom Werkstückträger erreicht wird, zu stoppen, insbesondere, bevor diese an die auf der ersten oder zweiten Trägereinheit gelagerte Führungseinrichtung übergeben werden. Mit einer derartigen Stoppvorrichtung kann sichergestellt werden, dass keine Übergabe von Werkstückträger erfolgen kann, wenn keine der Trägereinheiten derart positioniert ist, dass Werkstückträger auf dem Transportniveau transportierbar sind. Andernfalls würden die Werkstückträger samt darauf gelagertem Werkstück vom Transportband des Fixteils herabfallen oder abrutschen. Aus dem Bearbeitungsbereich antransportierte Werkstückträger können auch dann gestoppt werden, wenn die erste oder die zweite Trägereinheit zwar derart positioniert ist, dass Werkstückträger auf dem Transportniveau transportierbar sind, aber der entsprechend positionierten Trägereinheit gerade Werkstückträger aus dem Wechselbereich zugeführt werden oder zugeführt werden sollen. Die mindestens eine Stoppvorrichtung des ersten und zweiten Fixteils kann als Stopperzylinder ausgestaltet sein.

Die Erfindung betrifft ebenfalls eine Verfahren zum Betreiben einer modularen Weichenvorrichtung nach einem der Ansprüche 1 bis 7 mittels Werkstückträgern, wobei aus einem Wechselbereich eines Lineartransportsystems eine von einer Steuereinheit vorgegebene Anzahl an ersten Werkstückträgern auf die erste Trägereinheit transportiert und innerhalb eines für die ersten Werkstückträger vorgesehenen Bereichs auf der ersten Trägereinheit angeordnet wird, wobei die Steuereinheit nach Anordnung der vorgegebenen Anzahl an ersten Werkstückträgern auf der ersten Trägereinheit eine vertikale Verstellung der ersten Trägereinheit und der zweiten Trägereinheit bewirkt, welche die zweite Trägereinheit derart anordnet, dass auf der von der zweiten Trägereinheit umfassten Führungseinrichtung zweite Werkstückträger auf dem Transportniveau geführt transportierbar sind.

Der erste und der zweite Werkstückträger können baulich unterschiedlich oder baulich gleich ausgebildet sein. Insbesondere kann die Wahl des Werkstückträgers abhängig von dem zu bearbeitenden Werkstück sein.

Mittels dieses Verfahrens ist eine vorgegebene Anzahl an ersten Werkstückträgern auf einer ersten Trägereinheit zwischenlagerbar, welche dann im Bedarfsfall einem Bearbeitungsbereich schnell zugeführt werden kann. Es kann ferner eine gezielte Schleusung von Werkstückträgern mit entgegengesetzter Transportrichtung erfolgen. Dies erlaubt einen gemeinsamen Einlege- und Entnahmebereich für ein Lineartransportsystem bzw. Lineartransfersystem. Es wird ein Pendelbetrieb für das Lineartransportsystem ermöglicht.

Insbesondere, wenn die Werkstücke Kabel bzw. Leitungen sind, kann es vorteilhaft sein, erste und zweite Werkstückträger zu verwenden, die baulich unterschiedlich ausgestaltet sind. Bspw. kann der erste Werkstückträger einen langen Ausleger aufweisen und der zweite gegenüber dem ersten Werkstückträger einen verkürzten Ausleger. Dies kann auch umgekehrt vorgesehen werden, d.h. der erste Werkstückträger kann einen kurzen Ausleger aufweisen und der zweite Werkstückträger kann einen gegenüber dem kurzen Ausleger länger ausgebildeten Ausleger aufweisen. Der erste und der zweite Werkstückträger können sich auch in anderer Weise baulich voneinander unterscheiden.

Insbesondere bei der Verwendung baulich unterschiedlicher Werkstückträger sollte angestrebt werden, dass nicht gleichzeitig Werkstückträger unterschiedlicher Bauart im Bearbeitungsbereich prozessiert werden, da es sonst zu unerwünschten Wechselwirkungen zwischen Werkstückträgern unterschiedlicher Bauart kommen kann, bspw. über die auf diesen gelagerten Werkstücken.

Eine vorgegebene Anzahl bestückter erste Werkstückträger, baugleich zu den zweiten Werkstückträgern oder baulich unterschiedlich zu den zweiten Werkstückträgern, können somit auf der ersten Trägereinheit bzw. auf der von der ersten Trägereinheit umfassten Führungseinrichtung angeordnet werden. Ist die Anordnung der ersten Werkstückträger auf der ersten Trägereinheit abgeschlossen, kann mittels der Hubvorrichtung die erste und zweite Trägereinheit vertikal verfahren werden. Die Steuereinheit kontrolliert die vertikale Verstellung derart, dass die zweite Trägereinheit derart angeordnet wird, dass mittels dieser Werkstückträger auf Transportniveau transportierbar sind. Somit sind die ersten Werkstückträger mittels der ersten Trägereinheit auf einer Ebene oberhalb des Transportniveaus gelagert und können im Bedarfsfall wieder auf das Transportniveau abgesenkt werden.

In einer weiteren Ausführungsform des Verfahrens werden vom Wechselbereich zur Weichenvorrichtung antransportierte zweite Werkstückträger mittels der auf der zweiten Trägereinheit angeordneten Führungseinrichtung zum Bearbeitungsbereich geführt transportiert und/oder vom Bearbeitungsbereich zur Weichenvorrichtung antransportierte zweite Werkstückträger mittels der auf der zweiten Trägereinheit angeordneten Führungseinrichtung zum Wechselbereich geführt transportiert. Es erfolgt somit mittels der auf der zweiten Trägereinheit gelagerten Führungseinrichtung ein geführter Transport von Werkstückträgern aus dem Bearbeitungsbereich zum Wechselbereich bzw. vom Wechselbereich zum Bearbeitungsbereich, während die ersten Werkstückträger weiter auf der ersten Trägereinheit angeordnet bzw. zwischengelagert sind. Es wird somit ein normaler Betrieb des Lineartransportsystems ermöglicht, welcher durch die Zwischenlagerung der ersten Werkstückträger nicht negativ beeinflusst wird.

In einer weiteren Ausführungsform des Verfahrens wird mittels der Steuereinrichtung geprüft, ob die auf der ersten Trägereinheit gelagerten ersten Werkstückträger zum Transport in den Bearbeitungsbereich oder zum Transport in den Wechselbereich freigegeben sind, wobei im Fall der Freigabe die erste Trägereinheit derart abgesenkt wird, dass auf der ersten Trägereinheit gelagerte erste Werkstückträger auf Transportniveau transportierbar sind und die ersten Werkstückträger nach Erreichen des Transportniveaus abhängig von der erfolgten Freigabe zum Bearbeitungsbereich oder zum Wechselbereich transportiert werden. Die Steuereinheit prüft im Zuge der Freigabe etwa, ob noch zweite Werkstückträger im Bearbeitungsbereich angeordnet sind, welche noch vor der Prozessierung der zwischengelagerten ersten Werkstückträger in den als Entnahmebereich vorgesehenen Wechselbereich zu überführen sind. Ferner kann die Steuereinheit prüfen, ob noch zweite Werkstückträger priorisiert zu bearbeiten sind, d.h. vom als Einlegebereich wirkenden Wechselbereich in den Bearbeitungsbereich überführt werden sollen, bevor die zwischengelagerten ersten Werkstückträger in den Bearbeitungsbereich überführt werden. Hierzu kann die Steuereinheit mit einer übergeordneten Fertigungssteuerung verbunden sein, von welcher die Steuereinheit entsprechende Signale erhält.

Liegt eine Freigabe für die ersten Werkstückträger vor, senkt die Steuereinheit die erste Trägereinheit derart ab, dass die ersten Werkstückträger auf dem Transportniveau transportierbar sind. Sind die ersten Werkstückträger auf dem Transportniveau transportierbar, werden diese mittels der Führungseinrichtung und des Transportbands von der ersten Trägereinheit in den Bearbeitungsbereich transportiert und dort prozessiert bzw. bereits prozessierte zwischengelagerte erste Werkstückträger in den Wechselbereich transportiert.

Vorteilhafterweise wird während des Transports der ersten Werkstückträger zum oder während der Prozessierung der ersten Werkstückträger im Bearbeitungsbereich im Wechselbereich ein zweiter Werkstückträger oder wenigstens ein auf dem zweiten Werkstückträger gelagertes Werkstück entnommen. Damit findet parallel eine Prozessierung von ersten Werkstückträgern statt und eine Entnahme von auf zweiten Werkstückträgern gelagerte Werkstücke im Wechselbereich.

Ferner kann vorgesehen werden, dass nach der Entnahme der auf dem zweiten Werkstückträger gelagerten Werkstücke bzw. des zweiten Werkstückträgers wenigstens ein erster oder ein zweiter Werkstückträger, vorzugsweise eine Mehrzahl an ersten oder zweiten Werkstückträgern, im Wechselbereich bereitgestellt wird und der Weichenvorrichtung zur Zwischenlagerung zugeführt wird. Die Information der Anzahl an zwischenzulagernden Werkstückträgern und ob dies erste oder zweite Werkstückträger sein sollen, kann mittels der Steuereinheit vorgegeben werden. Vorteilhafterweise können diese dann bereitgestellten ersten oder zweiten Werkstückträger zur Zwischenlagerung auf die Weichenvorrichtung transportiert und auf der ersten Trägereinheit zwischengelagert werden, bevor die ersten Werkstückträger aus dem Bearbeitungsbereich an der Weichenvorrichtung eintreffen.

Dabei ist es von Vorteil für die weitere Verarbeitung der Werkstückträger sicherzustellen, dass der Steuereinheit bekannt ist, ob erste oder zweite Werkstückträger auf der Weichenvorrichtung zwischengelagert sind. Alternativ kann für die Zwischenlagerung vorgesehene erste Trägereinheit stets mit baulich gleichen Werkstückträgern, also stets nur ersten oder stets nur zweiten Werkstückträgern genutzt werden.

Es versteht sich, dass eine Zwischenlagerung nicht nur mittels der ersten Trägereinheit erfolgen kann, sondern auch mit der zweiten Trägereinheit.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine schematische Ansicht des Querschnitts auf eine erste und eine zweite Trägereinheit der modularen Weichenvorrichtung,
- Figur 2: eine perspektivische Frontansicht der modularen Weichenvorrichtung,
- Figur 3: eine perspektivische Rückseitenansicht der modularen Weichenvorrichtung,
- Figur 4: eine Aufsicht auf eine Trägereinheit der Weichenvorrichtung,
- Figur 5: ein Flussdiagramm zur Darstellung eines beispielhaften Verfahrensablaufs bei Verwendung von baugleichen ersten und zweiten Werkstückträgern, und
- Figur 6: ein Flussdiagramm zur Darstellung eines beispielhaften Verfahrensablaufs bei Verwendung von baulich unterschiedlichen ersten und zweiten Werkstückträgern.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

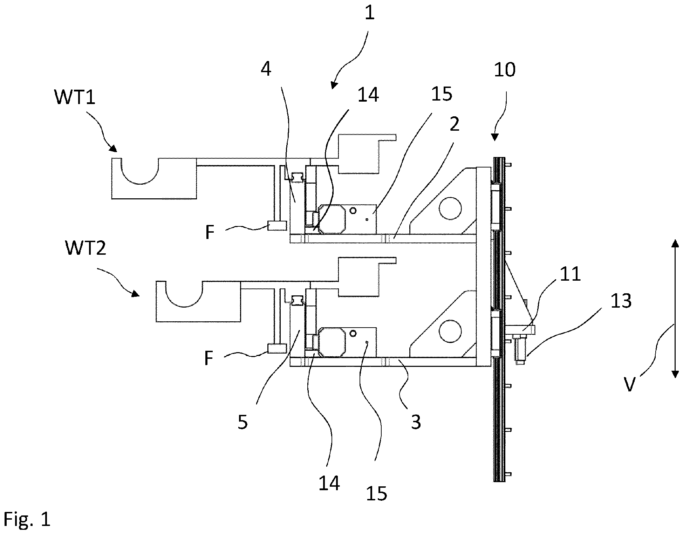

Figur 1 zeigt eine schematische Seitenansicht eines Abschnitts der Weichenvorrichtung 1. Diese umfasst eine erste Trägereinheit 2, welche horizontal, also im Wesentlichen senkrecht zur Richtung der Schwerkraft, angeordnet ist. Ferner umfasst die Weichenvorrichtung 1 eine zweite Trägereinheit 3, welche ebenfalls horizontal angeordnet ist. Die erste Trägereinheit 2 und die zweite Trägereinheit 3 sind in einer vertikalen Richtung V (Richtung der Schwerkraft) übereinander deckungsgleich angeordnet und fest zueinander beabstandet. Gemäß Figur 1 ist die obere Trägereinheit die erste Trägereinheit 2 und die unterhalb der ersten Trägereinheit 2 angeordnete Trägereinheit die zweite Trägereinheit 3.

Auf der ersten Trägereinheit 2 ist eine Führungseinrichtung 4 angeordnet. Die Führungseinrichtung 4 weist eine Längserstreckungsrichtung senkrecht in die Blattebene auf. Ebenso steht die Transportrichtung senkrecht zur Blattebene. Ist die erste Trägereinheit 2 auf einem Transportniveau angeordnet, ist ein Fuß F eines auf der Führungseinrichtung 4 angeordneten bzw. von dieser geführten ersten Werkstückträgers WT1 mit dem in Figur 1 nicht dargestellten Transportband in Kontakt. Mittels des Transportbands und der Führungseinrichtung 4 ist der erste Werkstückträger WT1 auf Transportniveau geführt transportierbar.

Auf der zweiten Trägereinheit 3 ist eine Führungseinrichtung 5 angeordnet, mittels welcher auf dieser angeordnete Werkstückträger WT2 bei Wechselwirkung mit dem in Figur 1 nicht dargestellten Transportband geführt transportierbar sind. Auch die Führungseinrichtung 5 weist eine Längserstreckungsrichtung senkrecht in die Blattebene auf. Ebenso steht die Transportrichtung in eine Richtung senkrecht zur Blattebene. Ist die zweite Trägereinheit 3 auf einem Transportniveau angeordnet, ist ein Fuß F eines mittels der Führungseinrichtung 5 geführten zweiten Werkstückträgers WT2 mit dem in Figur 1 nicht dargestellten Transportband in Kontakt. Mittels des Transportbands und der Führungseinrichtung 5 ist der erste Werkstückträger WT1 auf Transportniveau geführt transportbierbar.

Die Führungseinrichtung 4 und die Führungseinrichtung 5 können im Wesentlichen baugleich ausgestaltet sein und relativ zu ihrer Trägereinheit 2 bzw. 3 baugleich angeordnet sein.

Figur 1 zeigt einen ersten Werkstückträger WT1, welcher auf der Führungseinrichtung 4 angeordnet ist bzw. von dieser geführt ist, sowie einen zweiten Werkstückträger WT2, welcher auf der Führungseinrichtung 5 angeordnet bzw. von dieser geführt ist. In Figur 1 sind der erste Werkstückträger WT1 und der zweite Werkstückträger WT2 baulich unterschiedlich ausgebildet. Diese können jedoch auch baugleich sein.

In Figur 1 sind der erste und zweite Werkstückträger WT1 bzw. WT2 aus Gründen der Übersichtlichkeit nicht bestückt gezeigt. Typischerweise sind diese jedoch während des Betriebs der Weichenvorrichtung 1 mit Werkstücken, bspw. Rohleitungen, bestückt.

Die erste Trägereinheit 2 und die zweite Trägereinheit 3 sind fix an einer gemeinsamen Wand 10 abgestützt und angeordnet. Diese Wand 10 kann eine Schiene oder mehrere Schienen umfassen, mittels welcher die Wand gelagert ist. Das Vorsehen von Schienen erlaubt eine einfache Montage der ersten und zweiten Trägereinheit 2 bzw. 3 an der Wand 10 bzw. eine einfache Montage der Wand an der Weichenvorrichtung 1.

An der Wand 10 ist eine Querplatte 11 angeordnet, an welcher eine in Figur 1 nicht dargestellte Hubvorrichtung gelagert werden kann. Mittels der Hubvorrichtung kann die Querplatte 11 zusammen mit der Wand 10 in eine vertikale Richtung V, d.h. nach oben und unten, verstellt werden. Vorzugsweise ist die Hubvorrichtung derart an der Querplatte 11 gelagert, dass zwischen Querplatte 11 und der Hubvorrichtung keine Scherkräfte auftreten. Die Querplatte umfasst einen Stoßdämpfer 13, welcher die vertikale Bewegung der ersten und zweiten Trägereinheit 2 bzw. 3 nach oben begrenzt und nahe einer unteren Endposition dämpft.

Ferner umfasst die erste Trägereinheit 2 und die zweite Trägereinheit 3 jeweils wenigstens einen Sensor 14, vorzugsweise eine Mehrzahl an Sensoren 14, zur Erfassung der Präsenz eines Werkstückträgers an einer bestimmten Position auf der ersten oder zweiten Trägereinheit 2 bzw. 3.

Auf der ersten Trägereinheit 2 und zweiten Trägereinheit 3 ist jeweils mindestens eine Stoppvorrichtung in Form eines Stopperzylinders 15 angeordnet. Der Stopperzylinder dient dem Stoppen eines mittels der Führungseinrichtung 4 bzw. 5 transportierten Werkstückträgers WT1 bzw. WT2. Das Stoppen des Werkstückträgers kann auf unterschiedliche Arten erfolgen. Bspw. kann der Werkstückträger WT1 bzw. WT2 aus dem Eingriff mit dem Transportband gebracht werden, insbesondere durch Anheben. Bspw. kann die Bewegung des Werkstückträgers WT1 bzw. WT2 in Transportrichtung auch mittels des Stopperzylinders blockiert werden, z.B. mechanisch. In diesem Fall befindet sich der Fuß F noch im Eingriff mit dem Transportband, jedoch gleitet das Transportband aufgrund der Wirkung des Stopperzylinders unter dem Fuß hindurch.

Gemäß Figur 1 wird somit eine in vertikaler Richtung V verstellbare Baugruppe der Weichenvorrichtung 1 gezeigt, wobei die erste Trägereinheit 2 und die zweite Trägereinheit 3, welche jeweils horizontal ausgerichtet sind, gemeinsam angehoben oder abgesenkt werden können und dabei Werkstückträger WT1, WT2 auf der jeweiligen Führungseinrichtung 4 bzw. 5 angeordnet sein können.

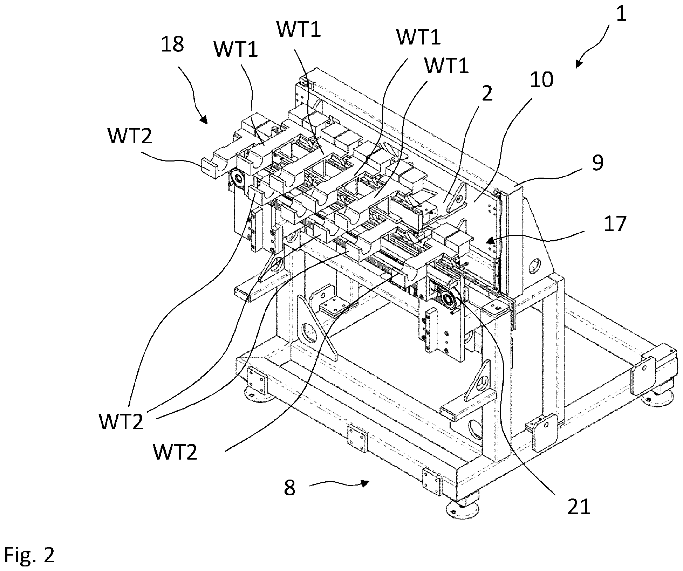

Figur 2 zeigt eine perspektivische Frontansicht der Weichenvorrichtung 1. Diese zeigt eine erste Trägereinheit 2 mit darauf gelagerten ersten Werkstückträgern WT1. Darunter, aufgrund der Perspektive verdeckt und daher nicht mit Bezugszeichen versehen, ist eine zweite Trägereinheit angeordnet, auf welcher zweite Werkstückträger WT2 angeordnet sind. Die erste Trägereinheit 2 und die zweite Trägereinheit sind an der gemeinsamen Wand 10 angeordnet und fix zueinander beabstandet, so dass eine in sich starre, bauliche Einheit, nämlich die in vertikaler Richtung V verstellbare Baugruppe als Teil der in Fig. 1 dargestellten Weichenvorrichtung 1 ausgebildet wird. Dabei ist, wie in Fig. 1 ersichtlich, die Wand 10 im Wesentlichen in vertikaler Richtung V ausgerichtet. Von einer ersten, in der Darstellung von Fig. 1 linken Seite der Wand 10 gehen die im Wesentlichen horizontal und parallel zu einander ausgerichteten Trägereinheiten 2, 3 ab. An einer gegenüberliegenden, in der Darstellung von Fig. 1 rechten Seite der Wand 10 greift die Hubvorrichtung an.

Vorliegend ist die zweite Trägereinheit derart angeordnet, dass mittels dieser zweite Werkstückträger WT2 auf Transportniveau transportierbar sind. Ferner sind zwei zweite Werkstückträger WT2 auf einem ersten Fixteil 17 und einem zweiten Fixteil 18 ebenfalls auf Transportniveau angeordnet.

Das erste und das zweite Fixteil 17 bzw. 18 sind ein nicht zusammen mit der ersten Trägereinheit 2 und der zweiten Trägereinheit vertikal verstellbarer Teil der Weichenvorrichtung 1. Das erste und das zweite Fixteil 17 bzw. 18 sind in Transportrichtung vor und hinter der ersten Trägereinheit 2 und zweiten Trägereinheit angeordnet und sind während des Betriebs der Weichenvorrichtung 1 stets derart angeordnet, dass mit diesen Werkstückträger WT1 bzw. WT2 auf Transportniveau transportierbar sind. Das erste und das zweite Fixteil 17 bzw. 18 umfassen jeweils eine Führungseinrichtung zur Führung von, insbesondere bewegten, Werkstückträgern WT1 bzw. WT2 auf dem jeweiligen Fixteil 17 bzw. 18.

Somit läuft ein aus einem Wechselbereich oder Bearbeitungsbereich in Richtung der Weichenvorrichtung 1 antransportierter Werkstückträger WT1 bzw. WT2 zunächst auf einem der Fixteile 17 oder 18, je nach Herkunftsrichtung, in die Weichenvorrichtung 1 ein. Von dem jeweiligen Fixteil 17 bzw. 18 wird ein Werkstückträger WT1 bzw. WT2 dann auf diejenige Trägereinheit transportiert, deren Führungseinrichtung derart angeordnet ist, dass damit Werkstückträger WT1 bzw. WT2 auf Transportniveau transportierbar sind. Je nach Betrieb der Weichenvorrichtung läuft der Werkstückträger WT1 vom ersten Fixteil 17 in Richtung des zweiten Fixteils 18 bzw. vom zweiten Fixteil 18 in Richtung des ersten Fixteils 17.

Das erste und/oder das zweite Fixteil 17 bzw. 18 umfassen ein gemeinsames, umlaufendes Transportband 21, welches mittels eines in Figur 2 nicht gezeigten Antriebs antreibbar ist. Der Antrieb kann bspw. zwei Riemenscheiben umfassen, von welchen wenigstens eine angetrieben ist, etwa mittels eines Motors. Das Transportband 21 wirkt mit den Riemenscheiben derart zusammen, dass mittels dem Transportband 21 Werkstückträger bewegt bzw. transportiert werden können.

Das Transportband 21, erstreckt sich als über die Riemenscheiben laufendes Umlaufband vom ersten Fixteil 17 zum zweiten Fixteil 18. Ist die erste Trägereinheit 2 oder die zweite Trägereinheit auf Transportniveau angeordnet, ist ein auf der jeweiligen Führungseinrichtung 4 bzw. 5 angeordneter Werkstückträger WT1 bzw. WT2 im Eingriff mit dem Transportband 21 und kann von diesem in Transportrichtung transportiert werden.

In Figur 2 ist die Weichenvorrichtung 1 in einem Zustand gezeigt, in welchem eine Anzahl an ersten Werkstückträgern WT1 auf der ersten Trägereinheit 2 zwischengelagert sind. Die zweite Trägereinheit ist derart positioniert, dass mittels dieser vom ersten Fixteil 17 auf die zweite Trägereinheit 2 übergebene zweite Werkstückträger WT2 in Richtung eines Bearbeitungsbereichs transportierbar sind. Ferner ist die zweite Trägereinheit auch derart positioniert, dass vom zweiten Fixteil 18 an die zweite Trägereinheit übergebene Werkstückträger WT2 in Richtung eines Wechselbereichs transportierbar sind.

Ferner ist aus Figur 2 das Gestell 8 ersichtlich sowie das Führungsgestell 9, mittels welchem die Wand 10 am Führungsgestell 9 gestützt ist.

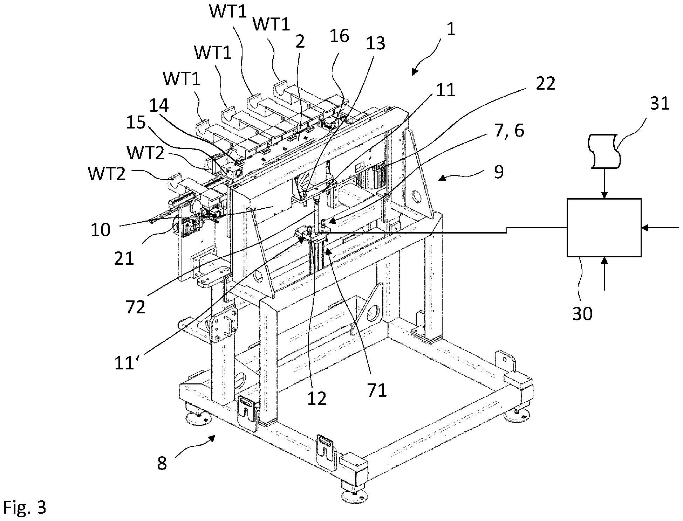

Figur 3 zeigt eine perspektivische Rückansicht der Weichenvorrichtung 1, welche in Figur 2 aus der Frontperspektive dargestellt ist. Die Weichenvorrichtung 1 ist somit in Figur 3 im gleichen Zustand dargestellt wie in Figur 2. Die zweite Trägereinheit ist weiterhin derart angeordnet, dass mittels dieser Werkstückträger, insbesondere zweite Werkstückträger WT2, auf Transportniveau transportierbar sind, während die erste Lagereinheit erhöht zum Transportniveau angeordnet ist und erste Werkstückträger WT1 zwischenlagert.

Aus der Rückansicht ist eine Hubvorrichtung 6 ersichtlich, welche als pneumatischer Zylinder 7 ausgebildet ist. Der pneumatische Zylinder 7 umfasst einen Zylindergrundkörper 71 und einen Kolben 72. Der Zylindergrundkörper 71 ist an dem Gestell 8 fest montiert. Mittels des Zylindergrundkörpers 71 und dem Gestell 8 wird die vertikale Verschiebung der Wand 10 samt der daran gelagerten ersten und zweiten Trägereinheit gestützt.

In Figur 3 ist der Zylindergrundkörper mit dem Gestell 8 mittels einer auskragenden Anschlagplatte 11' verbunden. Der vom pneumatischen Zylinder 7 ebenfalls umfasste bewegliche Kolben 72 ist mit seinem Ende an der Querplatte 11 gelagert. Durch vertikales Bewegen des Kolbens 72 relativ zum Zylindergrundkörper 71 bzw. zum Gestell 8 ist daher die Querplatte 11 samt Wand 10 in vertikaler Richtung verfahrbar.

Im Bereich des feststehenden Zylindergrundkörpers 71 sind zwei Stoßdämpfer 12 angeordnet. Diese werden als erste Stoßdämpfer 12 bezeichnet, da diese der Dämpfung und der Positionierung der Bewegung der ersten Trägereinheit 2 dienen, und zwar eine Bewegung dahingehend, dass mittels der ersten Trägereinheit 2 Werkstückträger WT1 auf einem Transportniveau transportierbar sind.

Das Transportniveau entspricht dem Höhen-Niveau, auf welchem Werkstückträger vom Bearbeitungsbereich oder dem Wechselbereich an die Weichenvorrichtung 1 übergebbar sind bzw. von der Weichenvorrichtung 1 an den Bearbeitungsbereich oder dem Wechselbereich übergebbar sind.

Ferner umfasst die Weichenvorrichtung 1 zwei zweite Stoßdämpfer 13, welche an der Querplatte 11 angeordnet sind. Befördert der pneumatische Zylinder 7 die Querplatte 11 samt Wand 10 nach oben, kommen die zweiten Stoßdämpfer 13 mit einem an einem Führungsgestell 9 angeordneten Anschlag in Kontakt. Hierdurch wird die Hubbewegung sanft abgebremst, bis die zweite Trägereinheit derart positioniert ist, dass mittels dieser bzw. deren Führungseinrichtung Werkstückträger auf Transportniveau transportierbar sind. Die zweiten Stoßdämpfer 13 dienen daher der Positionierung der zweiten Trägereinheit derart, dass mittels dieser Werkstückträger auf Transportniveau transportierbar sind.

Das Führungsgestell 9 stützt die Wand 10 samt der daran gelagerten ersten Trägereinheit 2 und zweiten Trägereinheit. Insbesondere ist die Wand 10 am Führungsgestell 9 in vertikaler Richtung beweglich gelagert. Das Führungsgestell kann hierzu Führungsschienen aufweisen, um eine geführte vertikale Bewegung zu ermöglichen.

Die erste Trägereinheit 2 umfasst ferner eine erste als Stopperzylinder 15 ausgebildete Stoppvorrichtung sowie eine zweite als Stopperzylinder 16 ausgebildete Stoppvorrichtung. Diese dienen der Positionierung der ersten Werkstückträger WT1 auf der ersten Trägereinheit 2. Eine entsprechende erste und zweite Stoppvorrichtung 15 bzw. 16 ist ebenfalls für die zweite Trägereinheit zur Positionierung der zweiten Werkstückträger WT2 vorhanden. Jedoch sind diese Stoppvorrichtungen und die zweite Trägereinheit aufgrund der perspektivischen Rückansicht in Figur 3 nicht sichtbar.

Ferner zeigt Figur 3 eine schematische Darstellung einer Steuereinheit 30, mittels welcher die Hubvorrichtung 6 bzw. der pneumatische Zylinder 7 gesteuert verfahrbar ist. Insbesondere kann mit dieser Steuereinheit 30 auch das Transportband 21 und/oder dessen Antrieb 22 steuerbar sein. Ferner erhält die Steuereinheit 30 eine Mehrzahl an Eingangsgrößen etwa von den Positionssensoren 14, sowie von den Stoppvorrichtung 15 bzw. 16 auf der ersten Trägereinheit 2 und auf der zweiten Trägereinheit. Ferner kann die Steuereinheit Daten erhalten von einer Fertigungssteuerung sowie von einer Steuerung für das Lineartransportsystem. Auf Basis der erfassten Daten erfolgt dann ein Absenken oder Anheben der Trägereinheiten mittels der von der Steuereinheit 30 angesteuerten Hubvorrichtung 6.

Die Steuereinheit 30 weist zu diesem Zweck einen maschinenlesbaren Programmcode 31 auf, der bei dessen Ausführung eine entsprechende Steuerung der Hubvorrichtung und ggf. des Transportbands 21 bzw. des Antriebs 22 für das Transportband 21. Der Programmcode kann in der Steuereinheit 30 mittels eines Speichers hinterlegt sein oder von anderer Stelle, bspw. über ein Netzwerk, für die Steuereinheit 30 ladbar bzw. zugänglich sein.

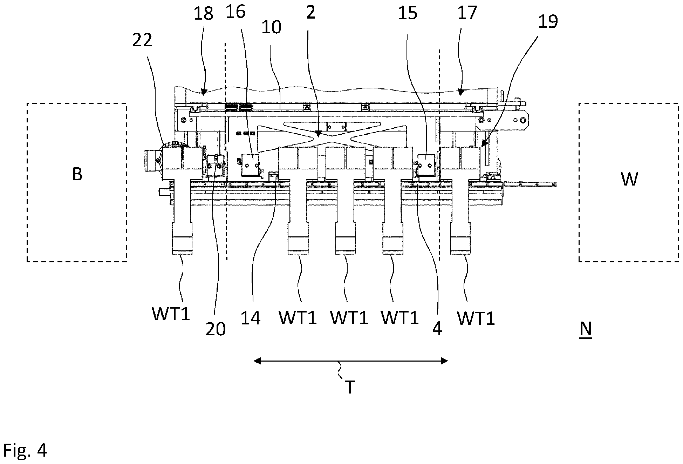

Figur 4 zeigt eine schematische Draufsicht auf die Weichenvorrichtung 1. Es ist die erste Trägereinheit 2 zu sehen, auf deren Führungseinrichtung 4 eine Mehrzahl an ersten Werkstückträgern WT1 angeordnet ist. Diese ist auf dem Transportniveau N angeordnet, d.h. derart angeordnet, dass von der ersten Trägereinheit 2 erste Werkstückträger WT1 in den Bearbeitungsbereich B förderbar sind. Es versteht sich, dass die erste Trägereinheit 2 somit auch derart angeordnet ist, dass von der ersten Trägereinheit 2 erste Werkstückträger WT1 in den Wechselbereich W förderbar sind.

In Figur 4 ist ersichtlich, dass in Transportrichtung T ein der ersten Trägereinheit 2 vorgelagertes erstes Fixteil 17 vorgesehen ist und ein in Transportrichtung der ersten Trägereinheit 2 nachgelagert zweites Fixteil 18. Das erste Fixteil 17 und das zweite Fixteil 18 sind nicht mittels der Hubvorrichtung höhenverstellbar, d.h. während eines Hubvorgangs der ersten und zweiten Trägereinheit relativ zum Gestell ortsfest.

Das erste und das zweite Fixteil 17 bzw. 18 sind derart angeordnet, dass mittels diesen Werkstückträger auf einem Transportniveau N, insbesondere dem Transportniveau N des Lineartransportsystems, transportierbar sind. Hierzu umfassen auch das erste Fixteil 17 und das zweite Fixteil 18 ein gemeinsames Transportband.

Das erste Fixteil 17 sowie das zweite Fixteil 18 weisen jeweils eine als Stopperzylinder 19 bzw. 20 ausgebildeten Stoppvorrichtung zum Stoppen der Bewegung von Werkstückträgern WT1 in bzw. entgegen einer bestimmten Transportrichtung T auf dem jeweiligen Fixteil 17 bzw. 18 auf.

Wird ein Werkstückträger WT1 aus dem Bearbeitungsbereich B antransportiert, so wird dieses vor Übergabe an die erste Trägereinheit 2 gestoppt, sofern dieses nicht für eine Übergabe auf die erste Trägereinheit 2 vorgesehen ist. Ein Stoppen erfolgt bspw. auch, wenn weder die erste Trägereinheit 2 noch die zweite Trägereinheit derart angeordnet ist, dass mittels diesen ein Werkstückträger WT1 auf Transportniveau N transportierbar ist. Dies gilt in gleicher Weise, wenn ein Werkstückträger vom Wechselbereich W zur Weichenvorrichtung antransportiert wird. Es können entsprechende Sensoren vorgelagert oder auf dem jeweiligen Fixteil 17 bzw. 18 vorgesehen werden sein, mittels welcher die Anwesenheit eines Werkstückträgers an der entsprechenden Position bzw. ein Einlaufen eines Werkstückträgers auf ein jeweiliges Fixteil 17 bzw. 18 detektierbar ist.

Durch die Stoppvorrichtung 19 bzw. 20 auf dem jeweiligen Fixteil 17 bzw. 18 wird erreicht, dass kein Werkstückträger an die erste oder zweite Trägereinheit übergeben wird, die hierfür nicht vorgesehen ist. Ferner wird ein Abrutschen von Werkstückträgern WT1 vom anfördernden Transportband verhindert, wenn die erste und zweite Trägereinheit nicht derart angeordnet ist, dass mit diesen ein Werkstückträger WT1 auf Transportniveau N transportierbar ist.

Figur 4 zeigt ebenfalls zwei als Stopperzylinder 15 bzw. 16 ausgebildete Stoppvorrichtungen, welche auf der ersten Trägereinheit 2 angeordnet sind. Ein erster Stopperzylinder 16 ist in Transportrichtung T im ersten Viertel bzw. ersten Fünftel der ersten Trägereinheit 2 angeordnet. Ein zweiter Stopperzylinder 15 ist in Transportrichtung im letzten Viertel bzw. letzten Fünftel der ersten Trägereinheit 2 angeordnet. Diese Anordnung ist in gleicher Weise auf der zweiten Trägereinheit vorhanden.

Dieser erste und zweite Stopperzylinder 15 bzw. 16 dient dazu, an die erste Trägereinheit 2 übergebene erste Werkstückträger WT1 in einem gewünschten Bereich der ersten Trägereinheit 2 zu positionieren und zwischen dem ersten und zweiten Stopperzylinder 15 bzw. 16 für die vertikale Bewegung zu sichern. Dies ist in gleicherweise für die zweite Trägereinheit, um auf dieser Werkstückträger, insbesondere zweite Werkstückträger, in gewünschter Weise zu positionieren, vorgesehen.

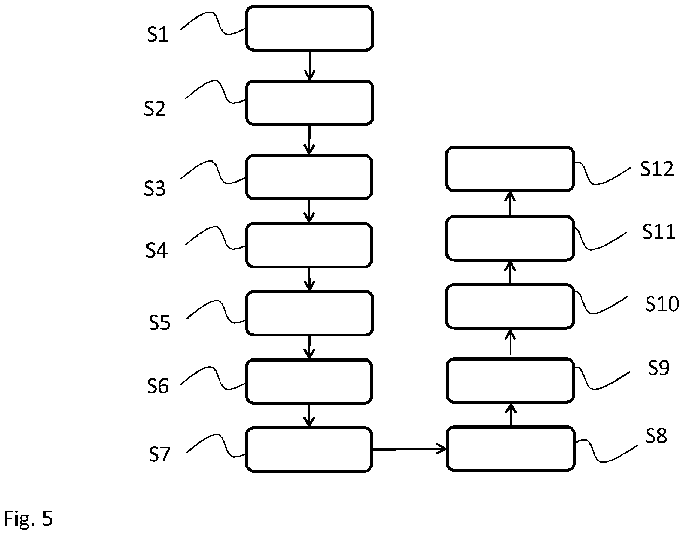

Figur 5 zeigt ein Flussdiagramm für einen schematischen Ablauf eines beispielhaften Verfahrens zum Betrieb der in den Figur 1 bis 3 beschriebenen modularen Weichenvorrichtung, wobei die verwendeten ersten und zweite Werkstückträger baugleich ausgebildet sind. Die Weichenvorrichtung ist zwischen einem Bearbeitungsbereich und einem Wechselbereich angeordnet, wobei der Wechselbereich als Einlege- und Entnahmebereich ausgebildet ist.

Das Verfahren geht davon aus, dass bereits zweite Werkstückträger im Bearbeitungsbereich bearbeitet werden und der Wechselbereich insoweit frei ist und dort erste Werkstücke auf erste Werkstückträger positioniert werden können.

Zunächst werden Werkstücke auf ersten Werkstückträgern im Wechselbereich auf dem Transportband positioniert bzw. eingelegt.

In einem Verfahrensschritt S1 werden die bestückten ersten Werkstückträger vom Wechselbereich zur Weichenvorrichtung transportiert. Der Transport findet auf dem Transportniveau des Lineartransportsystems statt.

In einem Verfahrensschritt S2 prüft die Steuereinheit, ob die erste Trägereinheit, d.h. die obere Trägereinheit, zur Aufnahme von ersten Werkstückträgern angeordnet ist, d.h. derart angeordnet ist, dass an diese auf Transportniveau erste Werkstückträger übergeben werden können.

In einem nächsten Verfahrensschritt S3 wird eine vorgegebene Anzahl an ersten Werkstückträgern auf die erste Trägereinheit transportiert. Diese vorgegebene Anzahl an ersten Werkstückträgern ist in der Steuereinrichtung hinterlegt bzw. ermittelbar.

In einem Verfahrensschritt S4 wird der in Transportrichtung erste der ersten Werkstückträger mittels der in Transportrichtung ersten Stoppvorrichtung gestoppt. Dazu wird der Stopperzylinder aktiviert und der in Transportrichtung erste der ersten Werkstückträger läuft auf den Stopperzylinder auf und wird in seiner Bewegung in Transportrichtung blockiert bzw. nicht mehr weitertransportiert.

In einem nächsten Verfahrensschritt S5 werden die weiteren ersten Werkstückträger der vorgegebenen Anzahl an Werkstückträgern Stoß auf Stoß an dem ersten gestoppten Werkstückträger angeordnet. Dabei wirkt der in Transportrichtung vorgelagerte gestoppte Werkstückträger als Stoppvorrichtung für nachfolgende Werkstückträger, da nachfolgende Werkstückträger auf diesen auflaufen und gestoppt werden. Die vorgegebene Anzahl an Werkstückträgern ist derart bestimmt, dass diese in einem vorgesehenen Bereich der ersten Trägereinheit, insbesondere Stoß auf Stoß, angeordnet werden können.

In einem Verfahrensschritt S6 erfolgt durch die Steuereinheit mittels Positionssensoren eine Prüfung der Positionen der ersten Werkstückträger auf der ersten Trägereinheit. Die Steuereinheit wertet aus, ob die Werkstückträger in dem vorgesehenen Bereich, insbesondere zwischen einem ersten Stopperzylinder im in Transportrichtung ersten Viertel der Trägereinheit und einem zweiten Stopperzylinder im in Transportrichtung letzten Viertel der ersten Trägereinheit, angeordnet sind. Ist dies nicht der Fall, erfolgt eine Repositionierung der ersten Werkstückträger, bis diese im vorgesehenen Bereich angeordnet sind.

Liegt eine Positionierung im vorgesehenen Bereich der ersten Trägereinheit vor, steuert die Steuereinheit die Hubvorrichtung in einem Verfahrensschritt S7 an und hebt die erste Trägereinheit samt der darauf gelagerten ersten Werkstückträger sowie die zweite Trägereinheit an. Die Anhebung erfolgt derart, dass die zweite Trägereinheit derart positioniert wird, dass auf dieser gelagerte Werkstückträger auf einem Transportniveau transportierbar sind.

Es werden dann in einem Verfahrensschritt S8 zwischenzeitlich zweite Werkstückträger aus dem Bearbeitungsbereich über die Weichenvorrichtung zum Wechselbereich transportiert. Währenddessen sind die ersten Werkstückträger auf der oberen Ebene zwischengelagert. Die ersten Werkstückträger werden so lange auf der oberen Ebene zwischengelagert, bis diese freigegeben werden. Diese Freigabe kann von einer Fertigungssteuereinheit an die Steuereinheit zur Steuerung der Hubvorrichtung kommuniziert werden.

In einem Verfahrensschritt S9 wird mittels der Steuereinheit geprüft, ob eine Freigabe für die Beförderung der zwischengelagerten Werkstückträger vorliegt. Diese wird dann gegeben, wenn sämtliche zweiten Werkstückträger vom Bearbeitungsbereich durch Transport über die zweite Trägereinheit in den für die zweiten Werkstückträger als Entnahmebereich wirkenden Wechselbereich transportiert sind.

Ist dies der Fall, senkt die Steuereinheit in einem Verfahrensschritt S10 die erste Trägereinheit derart ab, dass die auf dieser gelagerten ersten Werkstückträger auf Transportniveau transportierbar sind.

In einem Verfahrensschritt S11 werden die ersten Werkstückträger von der ersten Trägereinheit in den Bearbeitungsbereich transportiert und dort bearbeitet. Dort wird aus den bspw. auf den ersten Werkstückträgern aufgenommenen Werkstücken ein entsprechendes Fertigungsprodukt produziert.

Im Verfahrensschritt S12 werden die Werkstücke von den zweiten Werkstückträgern entnommen und diese mit neuen Werkstücken, z.B. Rohleitungen, bestückt.

Es kann dann ein neuer Zyklus beginnen, in welchem erste oder zweite Werkstückträger zur Zwischenlagerung auf der Weichenvorrichtung, insbesondere bestückt mit Werkstücken, bereitgestellt und zu dieser transportiert werden. Es versteht sich, dass der Zyklus ebenfalls mit zwischengelagerten zweiten Werkstückträgern anstatt ersten Werkstückträgern durchlaufen werden kann.

Mittels eines solchen Verfahrens wird es ermöglicht, dass ein Wechselbereich, der gleichzeitig als Einlegebereich und als Entnahmebereich genutzt werden kann, von nur einem Bediener effizient bedient werden kann, ohne dass dabei die Produktivität des Lineartransportsystems negativ beeinflusst wird.

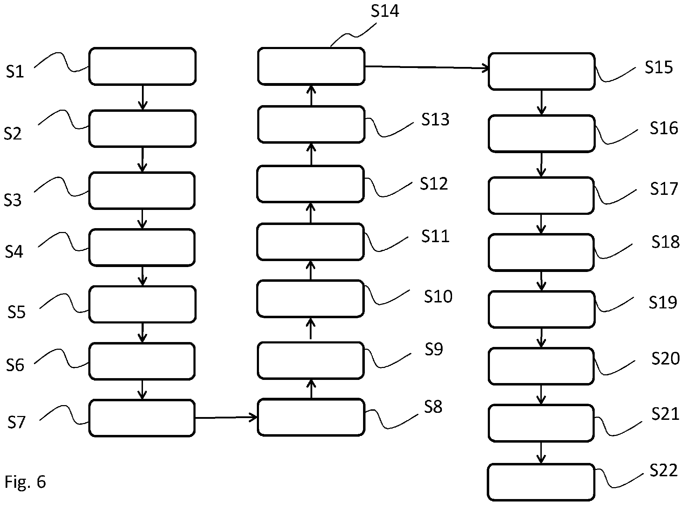

Figur 6 zeigt eine Variante des Verfahrens für erste und zweite Werkstückträger unterschiedlicher Bauart, bspw. kann der erste Werkstückträger einen langen Ausleger aufweisen und der zweite Werkstückträger einen kurzen Ausleger aufweisen. Derartig unterschiedliche ausgebildete Werkstückträger sind insbesondere von Vorteil bei der Fertigung von Leitungen. Bei dem Verfahren gemäß Figur 6 werden die obigen Verfahrensschritte S1 bis S12 gemäß Figur 5 entsprechend durchlaufen.

Bei der Prozessierung von ersten und zweiten Werkstückträgern, welche baulich unterschiedlich ausgebildet sind, ist es zu vermeiden, dass im Wechselbereich gleichzeitig Werkstückträger unterschiedlicher Bauart angeordnet sind bzw. sich die Werkstückträger unterschiedlicher Bauart auf dem Lineartransportsystem begegnen. Um dennoch ein Lineartransportsystem effizient zu betreiben, ist es von Vorteil, das nach Figur 5 beschriebene Verfahren weiterzubilden.

Während im Verfahrensschritt S12 die Werkstücke von den zweiten Werkstückträgern entnommen werden und diese mit neuen Werkstücken, z.B. Rohleitungen, bestückt werden, erfolgt in einem Verfahrensschritt S13 ein Rücktransport der im Bearbeitungsbereich prozessierten ersten Werkstückträger zurück in Richtung des Wechselbereichs.

Da im Wechselbereich jedoch zweite Werkstückträger positioniert sind, können die aus dem Bearbeitungsbereich antransportierten ersten Werkstückträger nicht in den Wechselbereich transportiert werden.

Aus diesem Grund erfolgt eine erneute Schleusung der ersten Werkstückträger mittels der Weichenvorrichtung, um ein Passieren der neu bestückten im Wechselbereich angeordneten zweiten Werkstückträger zu ermöglichen, ohne dass sich erste und zweite Werkstückträger begegnen.

In einem Verfahrensschritt S14 wird die aus dem Bearbeitungsbereich einlaufende, vorgegebenen Anzahl an ersten Werkstückträgern auf der ersten Trägereinheit der Weichenvorrichtung angeordnet. Dazu wird vorher geprüft, ob die erste Trägereinheit derart angeordnet ist, dass auf deren Führungseinrichtung vom Bearbeitungsbereich einlaufende erste Werkstückträger anordenbar sind. Ist dies nicht der Fall, wird die Hubvorrichtung entsprechend angesteuert und die erste Trägereinheit entsprechend positioniert. Wird das Verfahren nach obigen Verfahrensschritten S1 bis S12 ausgeführt befindet sich jedoch die erste Trägereinheit in einer Stellung, die geeignet ist zur Aufnahme von ersten Werkstückträgern. Die aus dem Bearbeitungsbereich antransportierten ersten Werkstückträger laufen über das dem Bearbeitungsbereich zugewandte Fixteil auf die Führungseinrichtung der ersten Trägereinheit.

In einem Verfahrensschritt S15 wird der erste in Richtung des Wechselbereichs laufende erste Werkstückträger mittels dem Wechselbereich zugewandten Stoppvorrichtung auf der Führungseinrichtung der ersten Trägereinheit gestoppt.

Anschließend erfolgt in einem Verfahrensschritt S16 eine Anordnung der vorgegebenen Anzahl an ersten Werkstückträgern Stoß auf Stoß sowie eine Überprüfung der Positionen der ersten Werkstückträger auf der ersten Trägereinheit in einem Verfahrensschritt S17.

Sind die ersten Werkstückträger derart angeordnet, dass die vertikale Verstellung der ersten Trägereinheit erfolgen kann, wird die erste und zweite Trägereinheit in einem Verfahrensschritt S18 angehoben, bis die zweite Trägereinheit derart angeordnet ist, dass mittels deren Führungseinrichtung Werkstückträger auf Transportniveau transportierbar sind.

Ist die zweite Trägereinheit entsprechend angeordnet, werden die zweiten Werkstückträger aus dem Wechselbereich über die Weichenvorrichtung in den Bearbeitungsbereich gefördert. Dies erfolgt in einem Verfahrensschritt S19.

In einem nächsten Verfahrensschritt S 20 erfolgt mittels der Steuereinheit eine Prüfung, ob die auf der ersten Trägereinheit gelagerten ersten Werkstückträger für den Weitertransport in den Wechselbereich freigegeben werden können, insbesondere, ob alle zweiten Werkstückträger aus dem Wechselbereich bereits die Weichenvorrichtung in Richtung des Bearbeitungsbereichs verlassen haben.

Ist dies der Fall, kann in einem Verfahrensschritt S21 die erste Trägereinheit derart abgesenkt werden, dass die ersten Werkstückträger auf Transportniveau angeordnet sind. Die ersten Werkstückträger können dann von der Weichenvorrichtung zum Wechselbereich transportiert werden.

In einem Verfahrensschritt S22 erfolgt eine Entnahme der im Bearbeitungsbereich prozessierten Werkstücke, bspw. von Fertigleitungen, welche auf den ersten Werkstückträgern gelagert sind, im Wechselbereich. Danach können die im Wechselbereich angeordneten ersten Werkstückträger wieder mit neuen Werkstücken, bspw. Rohleitungen, bestückt werden. Das Verfahren kann dann von vorne mit Schritt S1 durchgeführt werden. Mittels des Verfahrens gemäß Figur 6 wird eine Möglichkeit bereitgestellt eine Lineartransportsystem mit zwei baulich unterschiedlich ausgebildeten Werkstückträgern zu betreiben, wobei diese stets derart aneinander vorbeigeschleust werden, wodurch Fertigungsprobleme vermieden werden. Ferner ist auch hier das Entnehmen und Einlegen von Werkstücken mittels eines einzigen Wechselbereichs und mit nur einer Person ermöglicht.

### BEZUGSZEICHENLISTE

- 1: Weichenvorrichtung
- 2: Trägereinheit, erste
- 3: Trägereinheit, zweite
- 4: Führungseinrichtung, gelagert auf erster Trägereinheit
- 5: Führungseinrichtung, gelagert auf zweiter Trägereinheit
- 6: Hubvorrichtung
- 7: Zylinder
- 71: Zylindergrundkörper
- 72: Kolben
- 8: Gestell
- 9: Führungsgestell
- 10: Wand
- 11: Querplatte
- 11': Anschlagplatte
- 12: Stoßdämpfer, ersten
- 13: Stoßdämpfer, zweiten
- 14: Positionssensor
- 15: Stoppvorrichtung, Stopperzylinder, erster
- 16: Stoppvorrichtung, Stopperzylinder, zweiter
- 17: Fixteil, erstes, in Transportrichtung den Trägereinheiten vorgelagert
- 18: Fixteil, zweites, in Transportrichtung den Trägereinheiten nachgelagert
- 19: Stoppvorrichtung, erstes Fixteil: Stopperzylinder
- 20: Stoppvorrichtung, zweites Fixteil: Stopperzylinder
- 21: Transportband, angeordnet zum Transportieren auf Transportniveau
- 22: Antrieb für Transportband
- 30: Steuereinheit
- 31: Maschinenlesbarer Programmcode

- W: Wechselbereich
- B: Bearbeitungsbereich
- WT1: Werkstückträger, erster
- WT2: Werkstückträger, zweiter
- F: Fuß eines Werkstückträgers
- T: Transportrichtung
- N: Transportniveau
- V: Vertikale Richtung

- S1: Befördern von bestückten ersten Werkstückträgern vom Wechselbereich zur Weichenvorrichtung
- S2: Prüfschritt, ob erste Trägereinheit zur Aufnahme von ersten Werkstückträgern angeordnet ist
- S3: Transport der vorgegebenen Anzahl an ersten Werkstückträgern auf die erste Trägereinheit
- S4: Stoppen des in Transportrichtung ersten Werkstückträgers
- S5: Anordnung der ersten Werkstückträger Stoß auf Stoß
- S6: Prüfung der Positionen der ersten Werkstückträger auf der ersten Trägereinheit
- S7: Anheben der ersten Trägereinheit samt erster Werkstückträger bis zweite Trägereinheit angeordnet ist zur Aufnahme von zweiten Werkstückträgern
- S8: Transportieren von zweiten Werkstückträgern aus dem Bearbeitungsbereich zum Wechselbereich
- S9: Prüfung auf Freigabe der ersten Werkstückträger
- S10: Senken der ersten Trägereinheit zum Abtransportieren von Werkstückträgern an den Bearbeitungsbereich
- S11: Abtransportieren der ersten Werkstückträger Richtung Bearbeitungsbereich
- S12: Entnahme und Bestückung der auf den zweiten Werkstückträgern gelagerten Werkstücke im Wechselbereich
- S13: Transportieren von ersten Werkstückträgern aus dem Bearbeitungsbereich zur Weichenvorrichtung
- S14: Transport der vorgegebenen Anzahl an ersten Werkstückträgern auf die erste Trägereinheit
- S15: Stoppen des in Transportrichtung ersten Werkstückträgers
- S16: Anordnung der ersten Werkstückträger Stoß auf Stoß
- S17: Prüfung der Positionen der ersten Werkstückträger auf der ersten Trägereinheit
- S18: Anheben der ersten Trägereinheit samt erster Werkstückträger bis zweite Trägereinheit angeordnet ist zur Aufnahme von zweiten Werkstückträgern
- S19: Transportieren von zweiten Werkstückträgern aus dem Wechselbereich zum Bearbeitungsbereich
- S20: Prüfung auf Freigabe der ersten Werkstückträger
- S21: Senken der ersten Trägereinheit zum Abtransportieren von Werkstückträgern in den Wechselbereich
- S22: Entnahme und dann Bestückung der auf den ersten Werkstückträgern gelagerten Werkstücke im Wechselbereich

## Patentansprüche

1. Modulare Weichenvorrichtung (1) zum Zwischenlagern von Werkstückträgern (WT1, WT2) für ein Lineartransportsystem, wobei die Weichenvorrichtung (1) zwischen einem Wechselbereich (W), insbesondere einem Einlege- und/oder Entnahmebereich, und einem Bearbeitungsbereich (B) eines Werkstückträger (WT1, WT2) auf einem Transportniveau (N) transportierenden Lineartransportsystems anordenbar ist, umfassend eine erste horizontal angeordnete Trägereinheit (2) und eine zweite horizontal angeordnete Trägereinheit (3), wobei die erste und die zweite Trägereinheit (2, 3) vertikal übereinander angeordnet und zueinander fest beabstandet sind, wobei auf der ersten Trägereinheit (2) und der zweiten Trägereinheit (3) jeweils eine Führungseinrichtung (4, 5) gelagert ist, mit welcher Werkstückträger (WT1, WT2) in eine Transportrichtung (T) transportierbar sind, wobei die erste Trägereinheit (2) und die zweite Trägereinheit (3) mittels einer Hubvorrichtung (6, 7) gemeinsam derart in vertikaler Richtung (V) verstellbar sind, dass sowohl die auf der ersten Trägereinheit (2) angeordnete Führungseinrichtung (4) als auch die auf der zweiten Trägereinheit (3) angeordnete Führungseinrichtung (5) derart positioniert werden kann, dass mittels der jeweiligen Führungseinrichtung (4, 5) Werkstückträger (WT1, WT2) auf dem Transportniveau (N) transportierbar sind, **dadurch gekennzeichnet, dass**
die Werkstückträger (WT1, WT2) bei Wechselwirkung mit einem Transportband (21) in die Transportrichtung transportierbar sind, und dass
die erste und die zweite Trägereinheit (2, 3) an einer gemeinsamen Wand (10) gelagert sind, wobei die Wand (10) mittels der Hubvorrichtung (6, 7) in vertikaler Richtung (V) verstellbar ist,
und
dass die vertikale Verstellung der Wand (10) durch einen ersten und einen zweiten Stoßdämpfer (12, 13) begrenzt ist, wobei der erste Stoßdämpfer (12) derart angeordnet ist, dass dieser die vertikale Verstellung begrenzt, wenn die auf der ersten Trägereinheit (2) gelagerte Führungseinrichtung (4) derart positioniert ist, dass darauf anordenbare Werkstückträger (WT1, WT2) auf dem Transportniveau (N) transportierbar sind, wobei der zweite Stoßdämpfer (13) derart angeordnet ist, dass dieser die vertikale Verstellung begrenzt, wenn die auf der zweiten Trägereinheit (3) gelagerte Führungseinrichtung (5) derart positioniert ist, dass darauf anordenbare Werkstückträger (WT1, WT2) auf dem Transportniveau (N) transportierbar sind.

2. Modulare Weichenvorrichtung nach Anspruch 1,,
wobei die Hubvorrichtung (6, 7) als pneumatischer Zylinder (7) ausgebildet ist, welcher einen relativ zu einem Gestell (8) ortsfesten Zylindergrundkörper (71) aufweist, der an dem Gestell (8) gelagert ist, und einem in vertikaler Richtung (V) gesteuert verstellbaren Kolben (72), wobei der Kolben (72), insbesondere dessen Ende, an einer an der Wand (10) angeordneten Querplatte (11) gelagert ist.

3. Modulare Weichenvorrichtung nach Anspruch 1 oder 2,
wobei auf der ersten und auf der zweiten Trägereinheit (2, 3) eine Mehrzahl an Sensoren (14) zur Erfassung der Position von Werkstückträgern (WT1, WT2) angeordnet ist.

4. Modulare Weichenvorrichtung nach einem der vorhergehenden Ansprüche,
wobei auf der ersten Trägereinheit (2) und/oder auf der zweiten Trägereinheit (3) jeweils mindestens eine Stoppvorrichtung (15, 16), insbesondere ein Stopperzylinder, angeordnet ist, mittels welcher die Bewegung der Werkstückträger (WT1, WT2) auf der jeweiligen Führungseinrichtung (4, 5) an einer vorgegebenen Position stoppbar ist.

5. Modulare Weichenvorrichtung nach Anspruch 4,
wobei auf der ersten Trägereinheit (2) und/oder auf der zweiten Trägereinheit (3) jeweils mindestens eine erste und eine zweite Stoppvorrichtung (15, 16) angeordnet sind, mittels welchen die Position von Werkstückträgern (WT1, WT2) auf eine Position zwischen der ersten Stoppvorrichtung (15) und der zweiten Stoppvorrichtung (16) auf der jeweiligen Führungseinrichtung (4, 5) begrenzbar ist.

6. Modulare Weichenvorrichtung nach einem der vorhergehenden Ansprüche,
umfassend ein in Transportrichtung (T), der ersten und zweiten Trägereinheit (2, 3) vorgelagertes, erstes, relativ zum Transportniveau (N) ortsfestes Fixteil (17) und ein in Transportrichtung (T) der ersten und zweiten Trägereinheit (2, 3) nachgelagertes zweites, relativ zum Transportniveau (N) ortsfestes Fixteil (18), wobei das erste und/oder das zweite Fixteil (17, 18) ein Transportband (21) umfasst, wobei mittels des Transportbands (21) auf der ersten oder zweiten Trägereinheit (2, 3) angeordnete Werkstückträger (WT1, WT2) transportierbar sind, wenn diese auf dem Transportniveau (N) angeordnet sind.

7. Modulare Weichenvorrichtung nach Anspruch 6,
wobei das erste Fixteil (17) und das zweite Fixteil (18) jeweils mindestens eine Stoppvorrichtung (19, 20) umfasst, die dazu ausgestaltet ist, aus dem Bearbeitungsbereich (B) und/oder aus dem Wechselbereich (W) antransportierte Werkstückträger an einer vorgegebenen Position, insbesondere auf dem ersten oder zweiten Fixteil (17, 18) zu stoppen, insbesondere bevor diese an die auf der ersten oder zweiten Trägereinheit (2, 3) gelagerte Führungseinrichtung (4, 5) übergeben werden.

8. Verfahren zum Betreiben einer modularen Weichenvorrichtung (1) nach einem der vorhergehenden Ansprüche mittels Werkstückträgern, wobei aus einem Wechselbereich (W) eines Lineartransportsystems eine von einer Steuereinheit (30) vorgegebene Anzahl an ersten Werkstückträgern (WT1) auf die erste Trägereinheit (2) transportiert (S3) und innerhalb eines für die ersten Werkstückträger (WT1) vorgesehenen Bereichs auf der ersten Trägereinheit (2) angeordnet wird (S4, S5), wobei die Steuereinheit (30) nach Anordnung der vorgegebenen Anzahl an ersten Werkstückträgern (WT1) auf der ersten Trägereinheit (2) eine vertikale Verstellung der ersten Trägereinheit (2) und der zweiten Trägereinheit (3) bewirkt (S7), welche die zweite Trägereinheit (3) derart anordnet, dass mittels der auf der zweiten Trägereinheit (3) gelagerten Führungseinrichtung (5) zweite Werkstückträger ( WT2) auf dem Transportniveau (N) geführt transportierbar sind.

9. Verfahren nach Anspruch 8,
wobei vom Wechselbereich (B) zur Weichenvorrichtung (1) antransportierte zweite Werkstückträger (WT2) mittels der auf der zweiten Trägereinheit (3) angeordneten Führungseinrichtung (5) zum Bearbeitungsbereich (B) geführt transportiert werden und/oder vom Bearbeitungsbereich (B) zur Weichenvorrichtung (1) antransportierte zweite Werkstückträger (WT2) mittels der auf der zweiten Trägereinheit (3) angeordneten Führungseinrichtung (5) zum Wechselbereich (W) geführt transportiert werden.

10. Verfahren nach Anspruch 8 oder 9,
wobei mittels der Steuereinrichtung (30) geprüft wird (S9, S20), ob die auf der ersten Trägereinheit (2) gelagerten ersten Werkstückträger (WT1) zum Transport in den Bearbeitungsbereich (B) oder zum Transport in den Wechselbereich (W) freigegeben sind, wobei im Fall der Freigabe die erste Trägereinheit (2) derart abgesenkt wird (S10), dass auf der ersten Trägereinheit (2) gelagerte erste Werkstückträger (WT1) auf Transportniveau (N) transportierbar sind und die ersten Werkstückträger (WT1) nach Erreichen des Transportniveaus (N) abhängig von der erfolgten Freigabe zum Bearbeitungsbereich (B) oder zum Wechselbereich (W) transportiert werden (S11, S21).

11. Verfahren nach einem der Ansprüche 8 bis 10,
wobei während des Transports der ersten Werkstückträger (WT1) zum oder während einer Prozessierung der ersten Werkstückträger (WT1) im Bearbeitungsbereich (B) wenigstens ein zweiter Werkstückträger (WT2) oder ein auf dem zweiten Werkstückträger (WT2) gelagertes Werkstück im Wechselbereich (W) entnommen wird (S12).

## Claims

1. Modular diverting apparatus (1) for intermediate storage of workpiece carriers (WT1, WT2) for a linear transport system, wherein the diverting apparatus (1) is arrangeable between a changeover region (W), in particular an introduction and/or removal region, and a processing region (B) of a linear transport system that transports workpiece carriers (WT1, WT2) at a transport level (N), comprising a first horizontally arranged carrier unit (2) and a second horizontally arranged carrier unit (3), wherein the first and second carrier units (2, 3) are arranged vertically one above the other and are at a fixed distance from one another, wherein mounted on the first carrier unit (2) and the second carrier unit (3) is in each case one guide device (4, 5) by way of which workpiece carriers (WT1, WT2) are transportable in a transporting direction (T), wherein the first carrier unit (2) and the second carrier unit (3) are jointly adjustable in a vertical direction (V) by means of a lifting apparatus (6, 7) in such a way that both the guide device (4) arranged on the first carrier unit (2) and the guide device (5) arranged on the second carrier unit (3) are able to be positioned in such a way that, by means of the respective guide device (4, 5), workpiece carriers (WT1, WT2) are transportable at the transport level (N), **characterized in that** the workpiece carriers (WT1, WT2) are transportable in the transport direction upon interaction with a transport belt (21), and **in that** the first and second carrier units (2, 3) are mounted on a common wall (10), wherein the wall (10) is adjustable in the vertical direction (V) by means of the lifting apparatus (6, 7), and **in that** the vertical adjustment of the wall (10) is limited by a first and a second shock absorber (12, 13), wherein the first shock absorber (12) is arranged in such a way as to limit the vertical adjustment when the guide device (4) mounted on the first carrier unit (2) is positioned in such a way that workpiece carriers (WT1, WT2) arrangeable thereon are transportable at the transport level (N), wherein the second shock absorber (13) is arranged in such a way as to limit the vertical adjustment when the guide device (5) mounted on the second carrier unit (3) is positioned in such a way that workpiece carriers (WT1, WT2) arrangeable thereon are transportable at the transport level (N).

2. Modular diverting apparatus according to Claim 1,
wherein the lifting apparatus (6, 7) is in the form of a pneumatic cylinder (7) having a cylinder main body (71), which is positionally fixed relative to a framework (8) and is mounted on the framework (8), and a piston (72), which is adjustable in a controlled manner in the vertical direction (V), wherein the piston (72), in particular the end thereof, is mounted on a transverse plate (11) that is arranged on the wall (10).

3. Modular diverting apparatus according to Claim 1 or 2,
wherein a plurality of sensors (14) for detecting the position of workpiece carriers (WT1, WT2) is arranged on the first and on the second carrier unit (2, 3).

4. Modular diverting apparatus according to one of the preceding claims,
wherein, on the first carrier unit (2) and/or on the second carrier unit (3), there are/is arranged in each case at least one stopping apparatus (15, 16), in particular stopper cylinder, by means of which the movement of the workpiece carriers (WT1, WT2) on the respective guide device (4, 5) is stoppable at a predefined position.

5. Modular diverting apparatus according to Claim 4,
wherein, on the first carrier unit (2) and/or on the second carrier unit (3), there are/is arranged in each case at least one first and one second stopping apparatus (15, 16) by means of which the position of workpiece carriers (WT1, WT2) is limitable to a position between the first stopping apparatus (15) and the second stopping apparatus (16) on the respective guide device (4, 5).

6. Modular diverting apparatus according to one of the preceding claims,
comprising a first fixed part (17), which is arranged in front of the first and second carrier units (2, 3) in the transport direction (T) and is positionally fixed relative to the transport level (N), and a second fixed part (18), which is arranged behind the first and second carrier units (2, 3) in the transport direction (T) and is positionally fixed relative to the transport level (N), wherein the first and/or the second fixed part (17, 18) comprise(s) a transport belt (21), wherein, by means of the transport belt (21), workpiece carriers (WT1, WT2) arranged on the first or second carrier unit (2, 3) are transportable when they are arranged at the transport level (N).

7. Modular diverting apparatus according to Claim 6,
wherein the first fixed part (17) and the second fixed part (18) each comprise at least one stopping apparatus (19, 20) which is configured to stop at a predefined position, in particular on the first or second fixed part (17, 18), workpiece carriers transported in from the processing region (B) and/or from the changeover region (W), in particular before said workpiece carriers are transferred to the guide device (4, 5) mounted on the first or second carrier unit (2, 3).

8. Method for operating a modular diverting apparatus (1) according to one of the preceding claims using workpiece carriers, wherein, from a changeover region (W) of a linear transport system, a number, predefined by a control unit (30), of first workpiece carriers (WT1) is transported (S3) onto the first carrier unit (2) and is arranged (S4, S5) on the first carrier unit (2) within a region intended for the first workpiece carriers (WT1), wherein, after arrangement of the predefined number of first workpiece carriers (WT1) on the first carrier unit (2), a vertical adjustment of the first carrier unit (2) and the second carrier unit (3) is brought about (S7) by the control unit (30), the second carrier unit (3) being arranged by said vertical adjustment in such a way that, by means of the guide device (5) mounted on the second carrier unit (3), second workpiece carriers (WT2) are transportable in a guided manner at the transport level (N).

9. Method according to Claim 8,
wherein second workpiece carriers (WT2) transported from the changeover region (B) to the diverter apparatus (1) are transported in a guided manner to the processing region (B) by means of the guide device (5) arranged on the second carrier unit (3), and/or second workpiece carriers (WT2) transported from the processing region (B) to the diverter apparatus (1) are transported in a guided manner to the changeover region (W) by means of the guide device (5) arranged on the second carrier unit (3).

10. Method according to Claim 8 or 9,
wherein, by means of the control device (30), it is checked (S9, S20) whether the first workpiece carriers (WT1) mounted on the first carrier unit (2) are cleared for transport into the processing region (B) or for transport into the changeover region (W), wherein, in the case of clearance, the first carrier unit (2) is lowered (S10) in such a way that first workpiece carriers (WT1) mounted on the first carrier unit (2) are transportable at transport level (N) and, after the transport level (N) has been reached, the first workpiece carriers (WT1) are transported (S11, S21) to the processing region (B) or to the changeover region (W) according to the clearance realized.

11. Method according to one of Claims 8 to 10,
wherein, during the transport of the first workpiece carriers (WT1) to the processing region (B) or during processing of the first workpiece carriers (WT1) therein, at least one second workpiece carrier (WT2) or one workpiece mounted on the second workpiece carrier (WT2) is removed (S12) in the changeover region (W).

## Revendications

1. Dispositif modulaire d'aiguillage (1) permettant de stocker de manière intermédiaire des porte-pièces (WT1, WT2) pour un système de transport linéaire, le dispositif d'aiguillage (1) pouvant être agencé entre une région de changement (W), en particulier une région d'introduction et/ou de retrait, et une région de traitement (B) d'un système de transport linéaire transportant des porte-pièces (WT1, WT2) sur un niveau de transport (N), comprenant une première unité de support (2) agencée horizontalement et une deuxième unité de support (3) agencée horizontalement, la première et la deuxième unité de support (2, 3) étant agencées verticalement l'une au-dessus de l'autre et espacées fixement l'une de l'autre, un dispositif de guidage (4, 5) étant monté respectivement sur la première unité de support (2) et la deuxième unité de support (3), dispositif de guidage à l'aide duquel des porte-pièces (WT1, WT2) peuvent être transportés dans une direction de transport (T), la première unité de support (2) et la deuxième unité de support (3) étant déplaçables ensemble dans la direction verticale (V) à l'aide d'un dispositif de levage (6, 7), de telle sorte qu'à la fois le dispositif de guidage (4) agencé sur la première unité de support (2) et le dispositif de guidage (5) agencé sur la deuxième unité de support (3) peuvent être positionnés de telle sorte que des porte-pièces (WT1, WT2) peuvent être transportés sur le niveau de transport (N) à l'aide du dispositif de guidage (4, 5) respectif, **caractérisé en ce que**
les porte-pièces (WT1, WT2) peuvent être transportés dans la direction de transport lors de l'interaction avec une bande transporteuse (21), et **en ce que**
la première et la deuxième unité de support (2, 3) sont montées sur une paroi commune (10), la paroi (10) étant déplaçable dans la direction verticale (V) à l'aide du dispositif de levage (6, 7),
et **en ce que** le déplacement vertical de la paroi (10) est limité par un premier et un deuxième amortisseur de chocs (12, 13), le premier amortisseur de chocs (12) étant agencé de telle sorte que celui-ci limite le déplacement vertical lorsque le dispositif de guidage (4) monté sur la première unité de support (2) est positionné de telle sorte que des porte-pièces (WT1, WT2) pouvant être agencés sur celui-ci peuvent être transportés sur le niveau de transport (N), le deuxième amortisseur de chocs (13) étant agencé de telle sorte que celui-ci limite le déplacement vertical lorsque le dispositif de guidage (5) monté sur la deuxième unité de support (3) est positionné de telle sorte que des porte-pièces (WT1, WT2) pouvant être agencés sur celui-ci peuvent être transportés sur le niveau de transport (N).

2. Dispositif modulaire d'aiguillage selon la revendication 1,
le dispositif de levage (6, 7) étant réalisé sous forme de cylindre pneumatique (7), lequel présente un corps de base de cylindre (71) immobile par rapport à un cadre (8), qui est monté sur le cadre (8), et un piston (72) déplaçable de manière commandée dans la direction verticale (V), le piston (72), en particulier son extrémité, étant monté sur une plaque transversale (11) agencée au niveau de la paroi (10).

3. Dispositif modulaire d'aiguillage selon la revendication 1 ou 2,
une pluralité de capteurs (14) servant à la détection de la position de porte-pièces (WT1, WT2) étant agencée sur la première et sur la deuxième unité de support (2, 3).

4. Dispositif modulaire d'aiguillage selon l'une des revendications précédentes,
au moins un dispositif d'arrêt (15, 16), en particulier un cylindre d'arrêt, étant agencé respectivement sur la première unité de support (2) et/ou sur la deuxième unité de support (3), cylindre d'arrêt à l'aide duquel le mouvement des porte-pièces (WT1, WT2) sur le dispositif de guidage (4, 5) respectif peut être arrêté à une position prédéfinie.

5. Dispositif modulaire d'aiguillage selon la revendication 4,
au moins un premier et un deuxième dispositif d'arrêt (15, 16) étant agencés respectivement sur la première unité de support (2) et/ou sur la deuxième unité de support (3), dispositifs d'arrêt à l'aide desquels la position de porte-pièces (WT1, WT2) peut être limitée à une position entre le premier dispositif d'arrêt (15) et le deuxième dispositif d'arrêt (16) sur le dispositif de guidage (4, 5) respectif.

6. Dispositif modulaire d'aiguillage selon l'une des revendications précédentes,
comprenant une première partie fixe (17), immobile par rapport au niveau de transport (N), placée en amont de la première et de la deuxième unité de support (2, 3) dans la direction de transport (T), et une deuxième partie fixe (18), immobile par rapport au niveau de transport (N), placée en aval de la première et de la deuxième unité de support (2, 3) dans la direction de transport (T), la première et/ou la deuxième partie fixe (17, 18) comprenant une bande transporteuse (21), des porte-pièces (WT1, WT2) agencés sur la première ou la deuxième unité de support (2, 3) pouvant être transportés à l'aide de la bande transporteuse (21), lorsque ceux-ci sont disposés sur le niveau de transport (N).

7. Dispositif modulaire d'aiguillage selon la revendication 6,
la première partie fixe (17) et la deuxième partie fixe (18) comprenant respectivement au moins un dispositif d'arrêt (19, 20) qui est configuré pour arrêter à une position prédéfinie, en particulier sur la première ou la deuxième partie fixe (17, 18), des portes pièce qui ont été transportés hors de la région de traitement (B) et/ou hors de la région de changement (W), en particulier avant que ceux-ci ne soient transférés au dispositif de guidage (4, 5) monté sur la première ou la deuxième unité de support (2, 3).

8. Procédé de fonctionnement d'un dispositif modulaire d'aiguillage (1) selon l'une des revendications précédentes à l'aide de porte-pièces, dans lequel un nombre de premiers porte-pièces (WT1) prédéfini par une unité de commande (30) est transporté (S3) sur la première unité de support (2) à partir d'une région de changement (W) d'un système de transport linéaire et agencé (S4, S5) sur la première unité de support (2) à l'intérieur d'une région prévue pour les premiers porte-pièces (WT1), dans lequel l'unité de commande (30), après l'agencement du nombre prédéfini de premiers porte-pièces (WT1) sur la première unité de support (2), provoque (S7) un déplacement vertical de la première unité de support (2) et de la deuxième unité de support (3), lequel agence la deuxième unité de support (3) de telle sorte que des deuxièmes porte-pièces (WT2) peuvent être transportés de manière guidée sur le niveau de transport (N) à l'aide du dispositif de guidage (5) monté sur la deuxième unité de support (3).

9. Procédé selon la revendication 8,
dans lequel des deuxièmes porte-pièces (WT2) transportés à partir de la région de changement (B) jusqu'au dispositif d'aiguillage (1) sont transportés de manière guidée jusqu'à la région de traitement (B) à l'aide du dispositif de guidage (5) agencé sur la deuxième unité de support (3) et/ou des deuxièmes porte-pièces (WT2) transportés à partir de la région de traitement (B) jusqu'au dispositif d'aiguillage (1) sont transportés de manière guidée jusqu'à la région de changement (W) à l'aide du dispositif de guidage (5) agencé sur la deuxième unité de support (3).

10. Procédé selon la revendication 8 ou 9,
dans lequel, à l'aide du dispositif de commande (30), on vérifie (S9, S20) si les premiers porte-pièces (WT1) montés sur la première unité de support (2) sont autorisés à transporter dans la région de traitement (B) ou à transporter dans la région de changement (W), dans lequel, dans le cas de l'autorisation, la première unité de support (2) est abaissée (S10) de telle sorte que des premiers porte-pièces (WT1) montés sur la première unité de support (2) peuvent être transportés sur le niveau de transport (N) et les premiers porte-pièces (WT1), après avoir atteint le niveau de transport (N), sont transportés (511, S21) jusqu'à la région de traitement (B) ou jusqu'à la région de changement (W) en fonction de l'autorisation obtenue.

11. Procédé selon l'une des revendications 8 à 10,
dans lequel, pendant le transport des premiers porte-pièces (WT1) jusqu'à la région de traitement ou pendant un traitement des premiers porte-pièces (WT1) dans la région de traitement (B), au moins un deuxième porte-pièce (WT2) ou une pièce montée sur le deuxième porte-pièce (WT2) est retiré(e) (S12) dans la région de changement (W).
